# EUROPEAN PATENT APPLICATION

(11) **EP 4 624 180 A1**
(43) Date of publication of application: **01.10.2025**
(21) Application number: 25166394.4
(22) Date of filing: 26.03.2025
(51) Int. Cl.: B41J 3/407, B25J 11/00, B41J 25/308, G06K 15/02, G06K 15/10

(54) **THREE-DIMENSIONAL OBJECT PRINTING APPARATUS AND PATH GENERATION METHOD**

(30) Priority: 27.03.2024 JP 2024051136; 27.03.2024 JP 2024051100
(71) Applicant: Seiko Epson Corporation, Tokyo 160-8801 (JP)
(72) Inventor: UTSUNOMIYA, Kohei, Suwa-shi, 392-8502 (JP); YAMAZAKI, Takatoshi, Suwa-shi, 392-8502 (JP)
(74) Representative: Lewis Silkin LLP

(57) **Abstract**

A three-dimensional object printing apparatus includes a liquid ejection head that has a plurality of nozzles ejecting a liquid toward a workpiece, a multi-joint robot that has a tip end portion supporting the liquid ejection head and causes the liquid ejection head to scan with respect to the workpiece, and a control portion that creates a printing path along which the liquid ejection head is scanned, in which the control portion generates smoothing data by performing smoothing processing on workpiece data indicating a shape of a printing surface, which is a surface of the workpiece to be printed, and creates the printing path based on the smoothing data.

## Description

The present application is based on, and claims priority from JP Application Serial Number 2024-051136, filed March 27, 2024, JP Application Serial Number 2024-051100, filed March 27, 2024, and US 2023/0064877, published March 2, 2023, the disclosures of which are hereby incorporated by reference herein in their entirety.

### BACKGROUND

### 1. Technical Field

The present disclosure relates to a three-dimensional object printing apparatus and a path generation method.

### 2. Related Art

In the related art, as a three-dimensional object printing apparatus that performs printing by an ink jet method, a configuration is known in which a liquid ejection head is caused to scan with respect to a workpiece by a multi-joint robot, and a liquid such as ink is ejected from the liquid ejection head toward the workpiece. In this configuration, for an operation control of the multi-joint robot, it is necessary to generate a path along which the liquid ejection head is scanned with respect to the workpiece.

For example, JP-A-2023-031611 describes a method of generating a movement path of a head with respect to a workpiece based on an intersection line between a surface of a workpiece and a virtual plane in a virtual space by using data indicating a shape of the workpiece.

In the three-dimensional object printing apparatus, in order to ensure a printing quality, it is preferable to make a distance between the head and the workpiece as short as possible. In this regard, as described in JP-A-2023-031611, it is preferable to move the head so as to faithfully follow the shape of the surface of the workpiece. However, in the method described in JP-A-2023-031611, when the surface of the workpiece to be printed has unevenness, there is a possibility of collision between the head and the workpiece when the distance between the head and the workpiece is shortened. In addition, in the method described in JP-A-2023-031611, when the distance between the head and the workpiece is increased to avoid a collision between the head and the workpiece, the distance is increased as a whole, and thus there is a problem that the printing quality deteriorates.

### SUMMARY

According to an aspect of the present disclosure, there is provided a three-dimensional object printing apparatus including a liquid ejection head that has a plurality of nozzles ejecting a liquid toward a workpiece, a multi-joint robot that has a tip end portion supporting the liquid ejection head and causes the liquid ejection head to scan with respect to the workpiece, and a control portion that creates a printing path along which the liquid ejection head is scanned, in which the control portion generates smoothing data by performing smoothing processing on workpiece data indicating a shape of a printing surface, which is a surface of the workpiece to be printed, and creates the printing path based on the smoothing data.

According to another aspect of the present disclosure, there is provided a path generation method of creating a printing path, which is a movement path of a liquid ejection head during printing using a three-dimensional object printing apparatus including the liquid ejection head having a plurality of nozzles ejecting a liquid toward a workpiece and a multi-joint robot having a tip end portion supporting the liquid ejection head and causing the liquid ejection head to scan with respect to the workpiece, the method including generating smoothing data by performing smoothing processing on workpiece data indicating a shape of a printing surface, which is a surface of the workpiece to be printed, and creating a printing path based on the smoothing data, in which in the generating of the smoothing data, the printing surface is divided into predetermined regions to perform the smoothing processing.

### BRIEF DESCRIPTION OF THE DRAWINGS

FIG. 1 is a perspective view illustrating an overview of a three-dimensional object printing apparatus according to a first embodiment.
FIG. 2 is a block diagram illustrating an electrical configuration of the three-dimensional object printing apparatus according to the first embodiment.
FIG. 3 is a perspective view illustrating a schematic configuration of a head unit.
FIG. 4 is a diagram illustrating a flow of a path generation method according to the first embodiment.
FIG. 5 is a diagram illustrating an example of a shape indicated by workpiece data.
FIG. 6 is a diagram for describing generation of a temporary path.
FIG. 7 is a diagram for describing a relationship between the temporary path and a workpiece.
FIG. 8 is a diagram illustrating a flow of generating a printing path in the first embodiment.
FIG. 9 is a diagram for describing a point at which smoothing is performed.
FIG. 10 is a diagram for describing a relationship between the point at which the smoothing is performed and a region where smoothing is performed.
FIG. 11 is a diagram for describing a relationship between the region where the smoothing is performed and the head unit.
FIG. 12 is a diagram for describing the region where the smoothing is performed.
FIG. 13 is a diagram for describing the smoothing.
FIG. 14 is a diagram for describing a path based on smoothing data.
FIG. 15 is a diagram illustrating a flow of generating a curing path.
FIG. 16 is a diagram for describing the curing path.
FIG. 17 is a diagram describing the printing path.
FIG. 18 is a diagram for describing a first distance, a second distance, a third distance, and a fourth distance.
FIG. 19 is a diagram illustrating a flow of a collision determination.
FIG. 20 is a diagram illustrating a flow of generating printing data.
FIG. 21 is a diagram for describing a correspondence relationship between image data and printing data.
FIG. 22 is a diagram illustrating a flow of generating a printing path in a second embodiment.
FIG. 23 is a diagram illustrating a flow of generating a curing path in Modification Example 1.
FIG. 24 is a diagram for describing a printing path in Modification Example 2.

### DESCRIPTION OF EMBODIMENTS

Hereinafter, preferred embodiments according to the present disclosure will be described with reference to the accompanying drawings. In the drawings, the dimensions and scale of each portion are appropriately different from the actual ones, and some parts are schematically illustrated for easy understanding. In addition, the scope of the present disclosure is not limited to these forms unless it is stated in the following description that the present disclosure is particularly limited.

In the following, for convenience of description, an X axis, a Y axis, and a Z axis that intersect with each other are appropriately used. In addition, in the following, one direction along the X axis is the X1 direction, and the direction opposite to the X1 direction is the X2 direction. Similarly, the directions opposite to each other along the Y axis are the Y1 direction and the Y2 direction. In addition, the directions opposite to each other along the Z axis are a Z1 direction and a Z2 direction.

Here, the X axis, the Y axis, and the Z axis correspond to the coordinate axes of the world coordinate system set in the space where the robot 2 to be described later is installed. Typically, the Z axis is vertical, and the Z2 direction corresponds to a downward direction in a vertical direction. A base coordinate system based on the position of a base portion 210 to be described later of the robot 2 is associated with the world coordinate system by calibration. In the following, for convenience, a case where an operation of the robot 2 is controlled by using the world coordinate system as a robot coordinate system will be exemplified.

The Z axis may not be the vertical axis. In addition, the X axis, the Y axis, and the Z axis are typically orthogonal to each other, but the present disclosure is not limited to this, and the X axis, the Y axis, and the Z axis may not be orthogonal to each other. For example, the X axis, Y axis, and Z axis may intersect with each other at an angle within a range equal to or more than 80° and equal to or less than 100°.

### 1-1. Overview of Three-dimensional Object Printing Apparatus

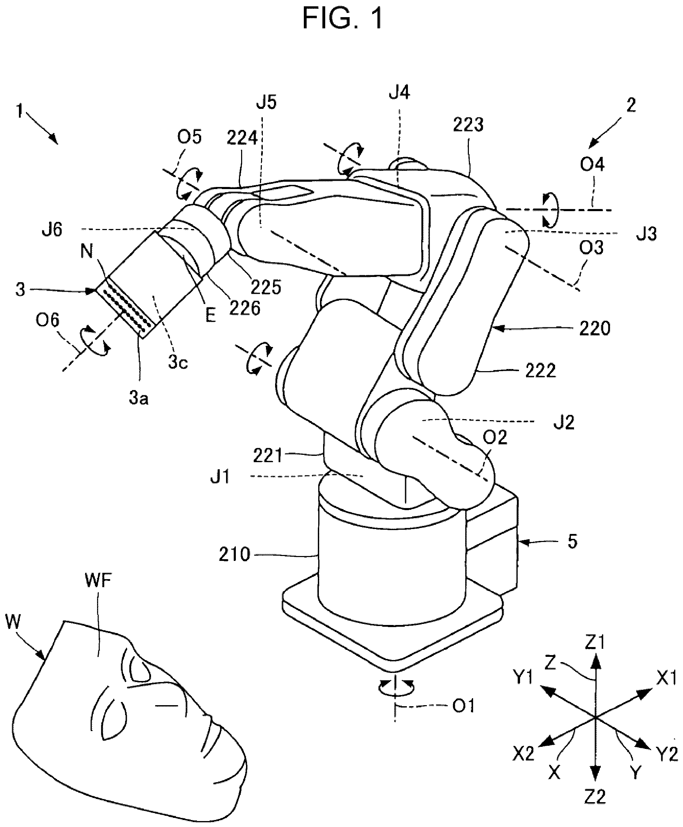

FIG. 1 is a perspective view illustrating an overview of a three-dimensional object printing apparatus 1 according to a first embodiment. The three-dimensional object printing apparatus 1 is the apparatus that performs printing on a surface of a three-dimensional workpiece W by an ink jet method.

The workpiece W has a printing surface WF which is a surface to be printed. In the example illustrated in FIG. 1, the workpiece W is a face mask having a human face shape, and the printing surface WF is a surface having unevenness along the human face shape. For example, the workpiece W during printing is supported by a structure such as a predetermined installation table, a hand of a robot other than the robot 2, which will be described below, or a conveyor, as necessary. A size, a shape, or an installation posture of the workpiece W is not limited to the example illustrated in FIG. 1, and is optional. However, when the printing surface WF has unevenness, the effect according to the present disclosure described later becomes remarkable.

As illustrated in FIG. 1, the three-dimensional object printing apparatus 1 includes a robot 2 which is an example of a "multi-joint robot", a head unit 3, and a controller 5. Hereinafter, first, the robot 2, the head unit 3, and the controller 5 will be briefly described in order with reference to FIG. 1.

The robot 2 is a multi-joint robot that has a tip end portion E supporting the head unit 3 and causes a liquid ejection head 3a to scan with respect to the workpiece W in the world coordinate system. In the example illustrated in FIG. 1, the robot 2 is a so-called 6-axis vertical multi-joint robot.

As illustrated in FIG. 1, the robot 2 includes a base portion 210 and an arm portion 220.

The base portion 210 is a base that supports the arm portion 220. In the example illustrated in FIG. 1, the base portion 210 is fixed to a floor surface facing the Z1 direction or an installation surface such as a base by screwing or the like. The installation surface to which the base portion 210 is fixed may be, for example, a surface of a wall, a ceiling, a movable cart, or the like.

The arm portion 220 is a 6-axis robot arm having a base end attached to the base portion 210 and a tip end portion E that changes a position and a posture three-dimensionally with respect to the base end. Specifically, the arm portion 220 has arms 221, 222, 223, 224, 225, and 226 also referred to as links, which are coupled in this order.

The arm 221 is coupled via the joint J1 to be rotatable around a rotation axis O1 with respect to the base portion 210. The arm 222 is coupled via the joint J2 to be rotatable around a rotation axis O2 with respect to the arm 221. The arm 223 is coupled via the joint J3 to be rotatable around a rotation axis O3 with respect to the arm 222. The arm 224 is coupled via the joint J4 to be rotatable around a rotation axis O4 with respect to the arm 223. The arm 225 is coupled via the joint J5 to be rotatable around a rotation axis O5 with respect to the arm 224. The arm 226 is coupled via the joint J6 to be rotatable around a rotation axis O6 with respect to the arm 225, and includes a tip end portion E.

Each of the joints J1 to J6 is a mechanism for rotatably coupling one of two adjacent members among the base portion 210 and the arms 221 to 226 to the other. In the following, each of the joints J1 to J6 may be referred to as a "joint J" without distinguishing the joints.

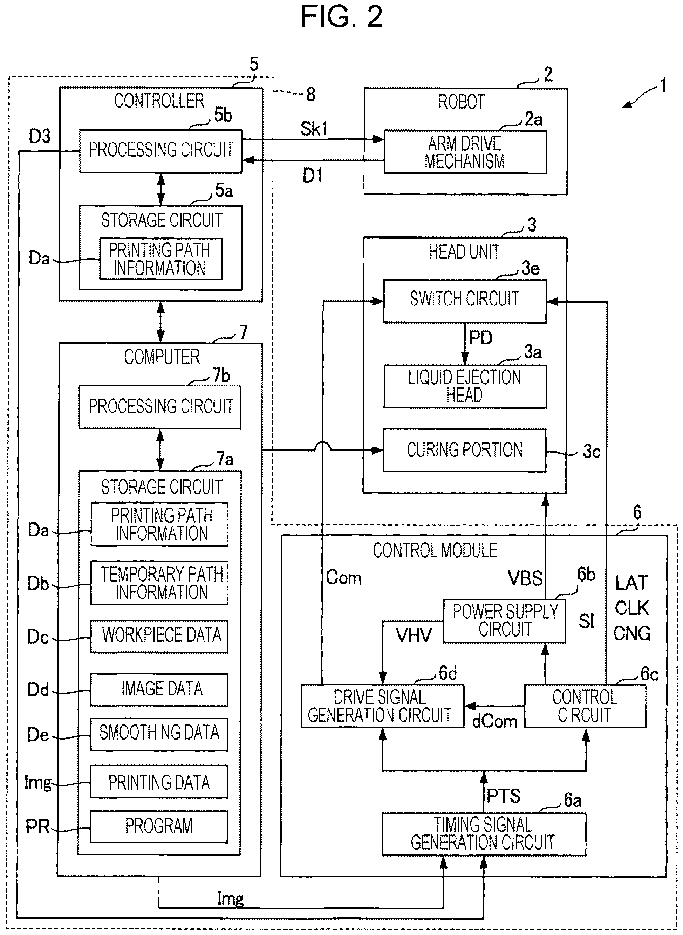

Although not illustrated in FIG. 1, each of the joints J1 to J6 is provided with a drive mechanism for rotating one of the two adjacent members corresponding to each other with respect to the other member. The drive mechanism includes, for example, a motor that generates a driving force for the rotation, a speed reducer that decelerates and outputs the driving force, an encoder such as a rotary encoder that measures the operation amount such as an angle of the rotation, and the like. An assembly of the drive mechanisms of the joints J1 to J6 corresponds to an arm drive mechanism 2a illustrated in FIG. 2 to be described later.

The rotation axis O1 is an axis perpendicular to the installation surface (not illustrated) to which the base portion 210 is fixed. The rotation axis O2 is an axis perpendicular to the rotation axis O1. The rotation axis O3 is an axis parallel to the rotation axis O2. The rotation axis O4 is an axis perpendicular to the rotation axis O3. The rotation axis O5 is an axis perpendicular to the rotation axis O4. The rotation axis O6 is an axis perpendicular to the rotation axis O5.

Regarding these rotation axes, "perpendicular" includes not only a case where an angle formed by two rotation axes is strictly 90°, but also a case where the angle formed by the two rotation axes deviates within a range of approximately 90° to ±5°. Similarly, "parallel" includes not only a case where two rotation axes are strictly parallel to each other, but also a case where one of the two rotation axes is inclined within a range of approximately ± 5° with respect to the other.

The head unit 3 is mounted on the tip end portion E of the above robot 2 as an end effector in a state of being fixed by screwing or the like.

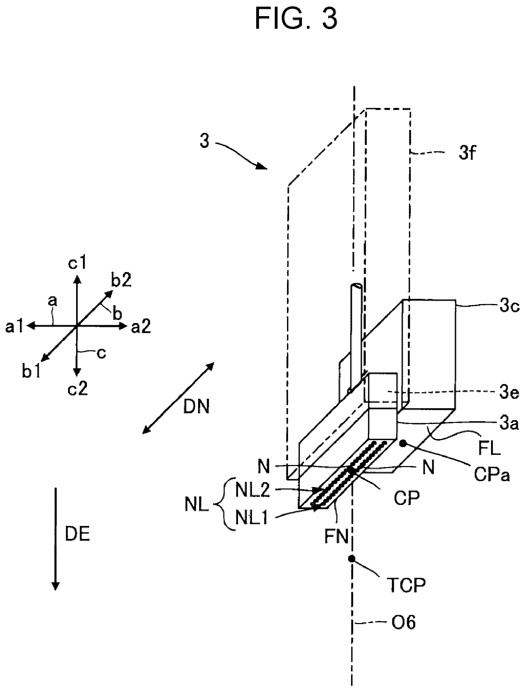

The head unit 3 is an assembly having the liquid ejection head 3a having a plurality of nozzles N for ejecting ink, which is an example of a "liquid", toward the workpiece W. In the present embodiment, the head unit 3 includes a curing portion 3c in addition to the liquid ejection head 3a. Details of the head unit 3 will be described below with reference to FIG. 3.

The ink is not particularly limited, and examples thereof include an aqueous ink in which a coloring material such as a dye or a pigment is dissolved in an aqueous solvent, a curable ink using a curable resin such as an ultraviolet curable type resin, a solvent-based ink in which a coloring material such as a dye or a pigment is dissolved in an organic solvent, and the like. Among the inks, the curable ink is preferably used. The curable ink is not particularly limited, and may be, for example, any of a thermosetting type, a photocurable type, a radiation curable type, an electron beam curable type, and the like, and a photocurable type such as an ultraviolet curable type is preferable. The ink is not limited to a solution, and may be an ink in which a coloring material or the like is dispersed as a dispersant in a dispersion medium. In addition, for example, the ink may be an ink containing conductive particles such as metal particles for forming a wiring or the like as a dispersant, a clear ink, or a treatment liquid for surface treatment of the workpiece W.

The controller 5 is a robot controller that controls the driving of the robot 2. Hereinafter, an electrical configuration of the three-dimensional object printing apparatus 1 will be described with reference to FIG. 2, including a detailed description of the controller 5.

### 1-2. Electrical Configuration of Three-dimensional Object Printing Apparatus

FIG. 2 is a block diagram illustrating an electrical configuration of the three-dimensional object printing apparatus 1 according to the first embodiment. In FIG. 2, among components of the three-dimensional object printing apparatus 1, electrical components are illustrated. As illustrated in FIG. 2, the three-dimensional object printing apparatus 1 includes a control portion 8, in addition to the components illustrated in FIG. 1 described above. The control portion 8 controls the operation of the liquid ejection head 3a and the robot 2. In addition, the control portion 8 has a function of generating printing path information Da described later, and generates the printing path RU. In the example illustrated in FIG. 2, the control portion 8 includes a controller 5, a control module 6 communicably connected to the controller 5, and a computer 7 communicably connected to the controller 5 and the control module 6. Hereinafter, each portion of the control portion 8 will be described in order with reference to FIG. 2.

Each electrical component illustrated in FIG. 2 may be appropriately divided, a part thereof may be included in another component, or may be integrally formed with the other component. For example, a part or the entirety of the functions of the controller 5 or the control module 6 may be realized by the computer 7, or may be realized by another external apparatus such as a personal computer (PC) connected to the controller 5 via a network such as a local area network (LAN) or the Internet. In addition, the computer 7 may be a server or the like communicably connected to the controller 5 and the control module 6 via a network such as a LAN or the Internet.

The controller 5 has a function of controlling the drive of the robot 2 and a function of generating a signal D3 for synchronizing an ink ejection operation of the head unit 3 with the operation of the robot 2.

The controller 5 includes a storage circuit 5a and a processing circuit 5b.

The storage circuit 5a stores various programs to be executed by the processing circuit 5b and various types of data to be processed by the processing circuit 5b. The storage circuit 5a includes, for example, one or both semiconductor memories of a volatile memory such as a random access memory (RAM) and a non-volatile memory such as a read-only memory (ROM), an electrically erasable programmable read-only memory (EEPROM) or a programmable ROM (PROM). A part or the entire of the storage circuit 5a may be included in the processing circuit 5b.

Printing path information Da is recorded in the storage circuit 5a.

The printing path information Da is used to control the operation of the robot 2, and is information that indicates the position and the posture of the liquid ejection head 3a in the printing path RU described later, which is a path along which the liquid ejection head 3a is to move when the printing operation is performed. Here, the printing path information Da includes information indicating a change in the relative position of the liquid ejection head 3a with respect to the workpiece W when the printing operation is performed, and information indicating a change in the relative posture of the liquid ejection head 3a with respect to the workpiece W when the printing operation is performed. However, the position and the posture of the liquid ejection head 3a are based on a tool center point TCP described later. The tool center point TCP is a virtual point whose positional relationship with the liquid ejection head 3a is fixed. Therefore, it can be said that the printing path information Da includes the position information indicating the position of the tool center point TCP and the posture information indicating the posture of the tool center point TCP. Although details will be described later, in the present embodiment, since the tool center point TCP is disposed in a space separated from the liquid ejection head 3a by a predetermined gap, in the actual printing operation, the liquid ejection head 3a passes through a path separated from the printing path RU indicated by the printing path information Da by a predetermined gap. The printing path information Da is represented by using, for example, coordinate values of a workpiece coordinate system based on the position of the workpiece W, the base coordinate system, or the world coordinate system. The printing path information Da is generated by a processing circuit 7b, and is input from the processing circuit 7b to the storage circuit 5a. When the printing path information Da is represented by using a coordinate value of the workpiece coordinate system, the printing path information Da is used for controlling the operation of the robot 2 after conversion from the coordinate value of the workpiece coordinate system to a coordinate value of the base coordinate system or the world coordinate system.

The processing circuit 5b controls an operation of the arm drive mechanism 2a of the robot 2 based on the printing path information Da, and generates the signal D3. The processing circuit 5b includes, for example, one or more processors such as a central processing unit (CPU). The processing circuit 5b may include a programmable logic device such as a field-programmable gate array (FPGA) instead of the CPU or in addition to CPU.

Here, the arm drive mechanism 2a is an assembly of the drive mechanisms of the joints J1 to J6 described above, and includes a motor for driving the joint of the robot 2 and an encoder for detecting the rotation angle of the joint of the robot 2 for each joint J.

The processing circuit 5b performs an inverse kinematics calculation, which is an arithmetic operation for converting the printing path information Da into the operation amount such as a rotation angle and a rotation speed of each joint J of the robot 2. The processing circuit 5b outputs a control signal Sk1 based on an output D1 from each encoder of the arm drive mechanism 2a so that the operation amount such as the actual rotation angle and the rotation speed of each joint J becomes the arithmetic operation result described above based on the printing path information Da. The control signal Sk1 is a signal for controlling the driving of the motor of the arm drive mechanism 2a. Here, the control signal Sk1 may be corrected by the processing circuit 5b based on an output from a distance sensor (not illustrated), as necessary.

In addition, the processing circuit 5b generates the signal D3, based on the output D1 from at least one of a plurality of encoders included in the arm drive mechanism 2a. For example, the processing circuit 5b generates a trigger signal including a pulse at a timing at which the output D1 from one of the plurality of encoders becomes a predetermined value as the signal D3.

The control module 6 is a circuit that controls an ink ejection operation in the head unit 3 based on the signal D3 output from the controller 5 and printing data Img from the computer 7. The control module 6 includes a timing signal generation circuit 6a, a power supply circuit 6b, a control circuit 6c, and a drive signal generation circuit 6d.

The timing signal generation circuit 6a generates a timing signal PTS based on the signal D3. The timing signal generation circuit 6a is configured with, for example, a timer that starts generation of the timing signal PTS by using detection of the signal D3 as a trigger.

The power supply circuit 6b receives power from a commercial power supply (not illustrated) to generate various predetermined potentials. The various generated potentials are appropriately supplied to each portion of the control module 6 and the head unit 3. For example, the power supply circuit 6b generates a power supply potential VHV and an offset potential VBS.

The control circuit 6c generates a control signal SI, a waveform designation signal dCom, a latch signal LAT, a clock signal CLK, and a change signal CNG, based on the timing signal PTS. These signals are synchronized with the timing signal PTS.

The control signal SI is a digital signal for designating the operation state of the drive element included in the liquid ejection head 3a of the head unit 3. Specifically, the control signal SI is a signal for designating whether or not to supply a drive signal Com to be described later to the drive element based on the printing data Img. With this designation, for example, whether or not to eject inks from a nozzle corresponding to the drive element is designated, and the amount of ink ejected from the nozzle is designated. The waveform designation signal dCom is a digital signal for defining the waveform of the drive signal Com. The latch signal LAT and the change signal CNG are signals for defining an ejection timing of the ink from the nozzle, in combination with the control signal SI, by defining a drive timing of the drive element. The clock signal CLK is a reference clock signal synchronized with the timing signal PTS.

The above control circuit 6c includes, for example, one or more processors such as a CPU. The control circuit 6c may include a programmable logic device such as an FPGA instead of the CPU or in addition to the CPU.

The drive signal generation circuit 6d is a circuit that generates the drive signal Com for driving each drive element included in the liquid ejection head 3a of the head unit 3. Specifically, the drive signal generation circuit 6d includes, for example, a DA conversion circuit and an amplifier circuit. In the drive signal generation circuit 6d, the DA conversion circuit converts the waveform designation signal dCom from the control circuit 6c from a digital signal to an analog signal, and the amplifier circuit uses the power supply potential VHV from the power supply circuit 6b to amplify the analog signal and generate the drive signal Com. Here, among waveforms included in the drive signal Com, a signal of a waveform actually supplied to the drive element is a drive pulse PD. The drive pulse PD is supplied from the drive signal generation circuit 6d to the drive element, via the switch circuit 3e of the head unit 3.

Here, the switch circuit 3e is a circuit including a switching element that switches whether or not to supply at least a part of the waveform included in the drive signal Com as the drive pulse PD based on the control signal SI.

The computer 7 has a function of generating the printing path information Da, a function of supplying information such as the printing path information Da to the controller 5, and a function of supplying information such as the printing data Img to the control module 6. The computer 7 of the present embodiment has a function of controlling the drive of the curing portion 3c in addition to these functions.

The computer 7 includes a storage circuit 7a and the processing circuit 7b. In addition, although not illustrated, the computer 7 has an input device that accepts an operation from a user, such as a keyboard or a mouse. The computer 7 may have a display device that displays information necessary for generating the printing path information Da, such as a liquid crystal panel.

The storage circuit 7a stores various programs to be executed by the processing circuit 7b and various types of data to be processed by the processing circuit 7b. The storage circuit 7a includes, for example, one or both semiconductor memories of a volatile memory such as a RAM and a non-volatile memory such as a ROM, an EEPROM, or a PROM. A part or the entire of the storage circuit 7a may be included in the processing circuit 7b.

The storage circuit 7a stores the printing path information Da, temporary path information Db, workpiece data Dc, image data Dd, smoothing data De, printing data Img, and a program PR.

The temporary path information Db is used for generating the printing path information Da, and is information indicating the position and the posture of the liquid ejection head 3a in a plurality of temporary paths used as a reference when creating a printing path RU described later in a virtual space VS, which is a virtual space modeled on a real space. Here, the temporary path information Db includes information indicating a change in the relative position of the liquid ejection head 3a with respect to the workpiece W and information indicating a change in the relative posture of the liquid ejection head 3a with respect to the workpiece W. However, it can be said that the temporary path information Db includes a position information component indicating the position of the tool center point TCP and a posture information component indicating the posture of the tool center point TCP. The temporary path information Db is represented by using, for example, the coordinate values of the workpiece coordinate system, the base coordinate system, or the world coordinate system. The temporary path information Db is generated by the processing circuit 7b, and is input from the processing circuit 7b to the storage circuit 5a. Here, at least one of the plurality of temporary paths indicated by the temporary path information Db is selected as a reference for creating the printing path RU indicated by the printing path information Da.

The workpiece data Dc is data representing at least a part of the shape of the workpiece W. Specifically, the workpiece data Dc is, for example, three-dimensional data in a Standard Triangulated Language (STL) format in which the shape of the workpiece W is represented by a plurality of polygons, and includes coordinate information which is information on coordinates of each vertex of the polygon, and vector information which is information on a normal vector indicating the front and rear of the polygon surface. The workpiece data Dc is obtained by performing conversion processing, as necessary, on computer-aided design (CAD) data indicating a three-dimensional shape of the workpiece W. The workpiece data Dc may be represented by using coordinate values of the workpiece coordinate system, or may be represented by point group data using coordinate values of the base coordinate system or the world coordinate system. In addition, the workpiece data Dc may be represented by a formula or the like, and the format of the workpiece data Dc may be appropriately converted as necessary.

The image data Dd is three-dimensional image information indicating an ideal printing image to be printed on the printing surface WF of the workpiece W. The image data Dd indicates an image of a three-dimensional shape along the printing surface WF, and includes, for example, color data or gradation data for each pixel at a position corresponding to the shape of the printing surface WF. The image data Dd is obtained by processing of pasting two-dimensional image data as a texture on the printing surface WF of the three-dimensional workpiece W. For example, the image data Dd is represented by a coordinate value in a workpiece coordinate system, a base coordinate system, or a world coordinate system. The image data Dd may be included in the workpiece data Dc.

The smoothing data De is data indicating a shape obtained by smoothing processing on the shape indicated by the workpiece W, and is obtained by smoothing processing on the workpiece data Dc. The smoothing processing is the processing of reducing the depth of a recessed portion in a processing target region. Specific examples of smoothing processing are not particularly limited, and examples thereof include convex hull processing, alpha shape processing, alpha wrapping processing, and the like.

Among these processing, the convex hull processing is preferable. The convex hull processing is the processing using a mathematical convex hull. Specifically, the convex hull processing is the processing in which a minimum polyhedron including all the points in the processing target region is specified using the points on the polygon data as a point group, and the surface of the specified polyhedron is regarded as the surface of the workpiece W. As a result, the facts positioned in the polyhedron and positioned in the recessed portion in the processing target region are no longer taken into consideration, and thus a shape in which the recessed portion is smoothed is obtained The convex hull processing is easy to use, and the position of the vertex of a projected portion in the processing target region does not change before and after the smoothing processing. Therefore, there is an advantage that the shape indicated by the workpiece data Dc has excellent reproducibility. In addition, since the shape of the workpiece W can be simplified in the convex hull processing, the processing can be accelerated. The smoothing data De may be represented by using the coordinate values in the workpiece coordinate system, or may be represented by using the point group data using the coordinate values in the base coordinate system or the world coordinate system. In addition, the smoothing data De may be represented by a formula or the like, and the format of the smoothing data De may be appropriately converted as necessary.

The printing data Img is information indicating an image to be printed on the workpiece W for each path of a printing path indicated by the printing path information Da. When the image indicated by the image data Dd is printed by dividing the image into a plurality of paths, the printing data Img indicates a plurality of images obtained by distributing the image indicated by the image data Dd to a plurality of printing paths indicated by the printing path information Da.

The program PR is a program for generating the printing path information Da.

The processing circuit 7b realizes each of the functions described above by executing a program such as the program PR. The processing circuit 7b includes, for example, one or more processors such as a CPU. The processing circuit 7b may include a programmable logic device such as an FPGA instead of the CPU or in addition to the CPU.

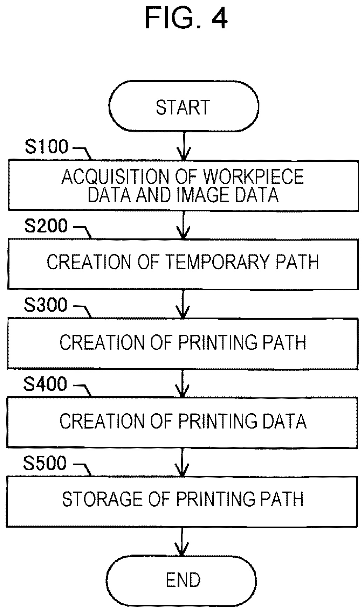

The processing circuit 7b realizes various functions for a later-described path generation method including the generation of the printing path information Da by executing the program PR. Details of the path generation method will be described later with reference to FIGS. 4 to 20.

As described above, by controlling the drive of the robot 2 based on the printing path information Da and controlling the drive of the liquid ejection head 3a based on the printing data Img and the signal D3, the printing operation is performed. In the printing operation, the robot 2 changes the position and the posture of the liquid ejection head 3a based on the printing path information Da, and the liquid ejection head 3a ejects the ink from the liquid ejection head 3a toward the workpiece W at an appropriate timing based on the printing data Img and the signal D3. Thus, an image based on the printing data Img is formed at the workpiece W.

As described above, the control portion 8 executes the printing operation of performing printing on the workpiece W by controlling the operation of the liquid ejection head 3a and the robot 2.

### 1-3. Configuration of Head Unit

FIG. 3 is a perspective view illustrating a schematic configuration of the head unit 3. In the following description, for convenience, an a-axis, a b-axis, and a c-axis that intersect with each other will be appropriately used. In addition, in the following description, one direction along the a-axis is an a1 direction, and a direction opposite to the a1 direction is an a2 direction. Similarly, directions opposite to each other along the b-axis are a b1 direction and a b2 direction. In addition, directions opposite to each other along the c-axis are a c1 direction and a c2 direction.

Here, the a-axis, the b-axis, and the c-axis correspond to coordinate axes of a tool coordinate system set in the head unit 3, and relative positions and relationships of postures with the world coordinate system or the robot coordinate system described above are changed by the operation of the robot 2 described above. In the example illustrated in FIG. 3, the c-axis is an axis parallel to the rotation axis O6 described above. The a-axis, the b-axis, and the c-axis are typically orthogonal to each other, but the present disclosure is not limited to this, and the a-axis, the b-axis, and the c-axis need only intersect with each other at an angle within a range equal to or more than 80° and equal to or less than 100°, for example. The tool coordinate system and the base coordinate system or the robot coordinate system are associated with each other by calibration.

The tool coordinate system is set with reference to the tool center point TCP. Therefore, the position and the posture of the liquid ejection head 3a are defined with reference to the tool center point TCP. In the present embodiment, as illustrated in FIG. 3, the tool center point TCP is disposed in a space separated by a predetermined gap in an ejection direction DE of inks from a center of a nozzle array NL of the liquid ejection head 3a in the b-axis direction. For example, the position of the tool center point TCP may be the center CP of the nozzle surface FN.

As described above, the head unit 3 includes the liquid ejection head 3a and the curing portion 3c. The liquid ejection head 3a and the curing portion 3c are supported by a support body 3f illustrated by a two-dot chain line in FIG. 3. In the example illustrated in FIG. 3, the number of liquid ejection heads 3a included in the head unit 3 is one, but the number is not limited to the example illustrated in FIG. 3, and may be two or more. In addition, in addition to the liquid ejection head 3a and the curing portion 3c, for example, the head unit 3 may include a pressure adjusting valve that adjusts the pressure of the ink in the liquid ejection head 3a, or may include a sensor for measuring a physical quantity related to the head unit 3.

The support body 3f is made of, for example, a metal material or the like, and is a substantially rigid body. In FIG. 3, the support body 3f has a planar box shape, and the shape of the support body 3f is not particularly limited, and is optional.

The above support body 3f is mounted to the arm 226 described above. Therefore, the liquid ejection head 3a and the curing portion 3c are collectively supported by the arm 226 via the support body 3f. Therefore, the relative positions of the liquid ejection head 3a and the curing portion 3c with respect to the arm 226 are fixed. In the example illustrated in FIG. 3, the curing portion 3c is disposed at a position in the a2 direction with respect to the liquid ejection head 3a.

The liquid ejection head 3a has a nozzle surface FN and a plurality of nozzles N that are open to the nozzle surface FN. The nozzle surface FN is a surface on which the nozzle N is opened, and is made of a material such as silicon (Si) or metal, or is a surface including a plate surface of the nozzle plate and a surface of the other member.
In the example illustrated in FIG. 3, a normal direction of the nozzle surface FN, that is, the ejection direction DE of the ink from the nozzle N is the c2 direction. Strictly, there is a case where the ejection direction DE and the c2 direction are not parallel to each other due to inertia, an influence of an air flow or the like by the operation of the robot 2, and in the present embodiment, such an error is not considered.

The plurality of nozzles N are divided into a first nozzle array NL1 and a second nozzle array NL2 aligned apart from each other in a direction along the a-axis. Each of the first nozzle array NL1 and the second nozzle array NL2 is a set of the plurality of nozzles N linearly arrayed in a nozzle array direction DN which is a direction along the b-axis. Here, elements related to each of the nozzles N of the first nozzle array NL1 and elements related to each of the nozzles N of the second nozzle array NL2 in the liquid ejection head 3a are configured to be substantially symmetrical with each other in a direction along the a-axis.

Meanwhile, the positions of the plurality of nozzles N in the first nozzle array NL1 and the plurality of nozzles N in the second nozzle array NL2 in the direction along the b-axis may or may not coincide with each other. In addition, the elements related to each nozzle N of one of the first nozzle array NL1 and the second nozzle array NL2 may be omitted. In the following, a configuration in which the positions of the plurality of nozzles N in the first nozzle array NL1 and the plurality of nozzles N in the second nozzle array NL2 in the direction along the b-axis coincide with each other will be described.

In the following, the entire first nozzle array NL1 and the entire second nozzle array NL2 may be referred to as a nozzle array NL. The nozzle array NL includes the first nozzle array NL1 and the second nozzle array NL2.

Although not illustrated, the liquid ejection head 3a includes a piezoelectric element which is a drive element and a cavity for accommodating inks, for each nozzle N. Here, the piezoelectric element ejects an ink in the ejection direction DE from a nozzle corresponding to the cavity, by changing a pressure of the cavity corresponding to the piezoelectric element. As the drive element for ejecting the ink from the nozzle, a heater that heats the ink in the cavity may be used, instead of the piezoelectric element.

The curing portion 3c is disposed behind the liquid ejection head 3a in the scanning direction, which is a direction among which the liquid ejection head 3a is scanned with respect to the workpiece W, and cures the ink ejected from the liquid ejection head 3a onto the workpiece W.

The curing portion 3c emits energy such as light, heat, electron beam, or radiation for curing or solidifying the ink on the workpiece W. For example, when the ink has ultraviolet curability, the curing portion 3c includes a light emitting element such as a light emitting diode (LED) that emits ultraviolet rays. In addition, the curing portion 3c may appropriately have an optical component such as a lens for adjusting an emission direction or an emission range of energy.

### 1-4. Path Generation Method

FIG. 4 is a diagram illustrating a flow of a path generation method according to the first embodiment. As illustrated in FIG. 4, the path generation method includes step S100, step S200, step S300, step S400, and step S500 in this order, and creates the printing path RU, which is the movement path of the liquid ejection head 3a during printing using the three-dimensional object printing apparatus 1. In the present embodiment, these steps are executed by the control portion 8, more specifically, the processing circuit 7b of the computer 7. Hereinafter, an overview of each step will be described.

In step S100, the workpiece data Dc and the image data Dd are acquired. The acquisition of the workpiece data Dc is not particularly limited, and for example, the workpiece data Dc may be acquired by appropriately converting the CAD data of the workpiece W, may be acquired by reading the existing shape data from another device, or may be acquired by measuring the shape of the workpiece W using a camera or the like which can measure a three-dimensional shape. For example, the image data Dd may be acquired by reading existing image data from another device, or may be acquired by the processing of pasting two-dimensional image data as a texture on the three-dimensional shape indicated by the workpiece data Dc.

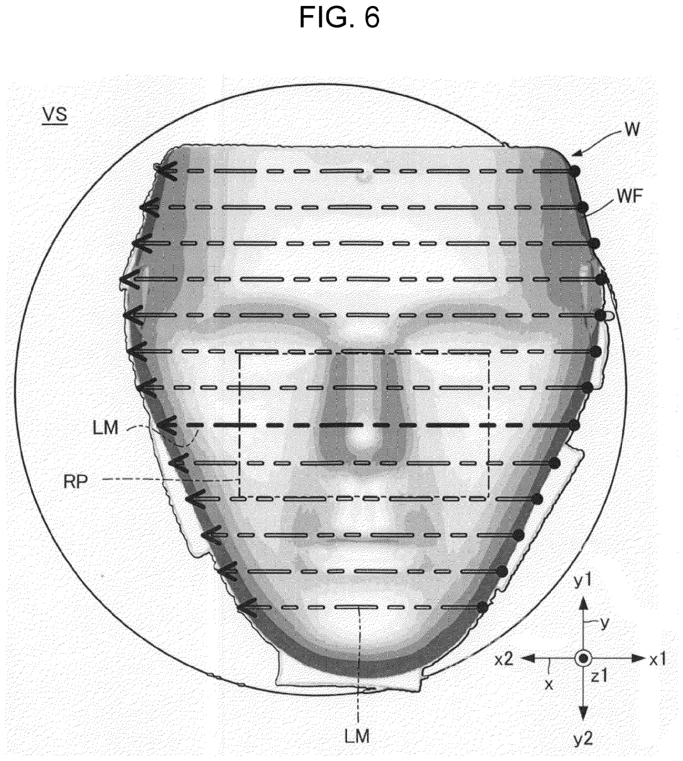

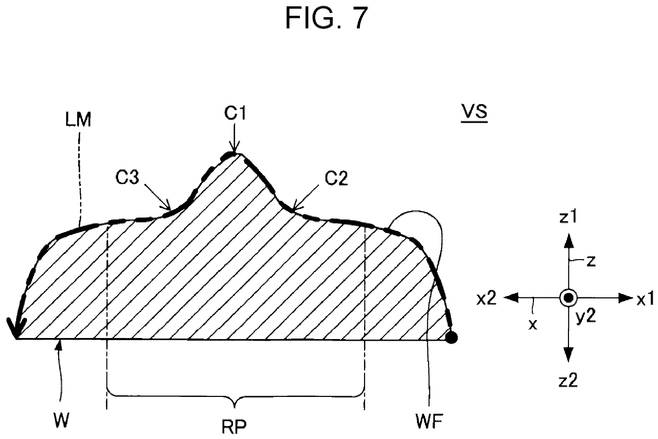

In step S200, a plurality of temporary paths LM described later are created. The plurality of temporary paths LM are created by using, for example, a method of creating a printing path described in JP-A-2023-31611 or US 2023/0064877. As a result, the temporary path information Db indicating the plurality of temporary paths LM described later is created. The specific examples of the plurality of temporary paths LM indicated by the temporary path information Db will be described later with reference to FIGS. 6 and 7.

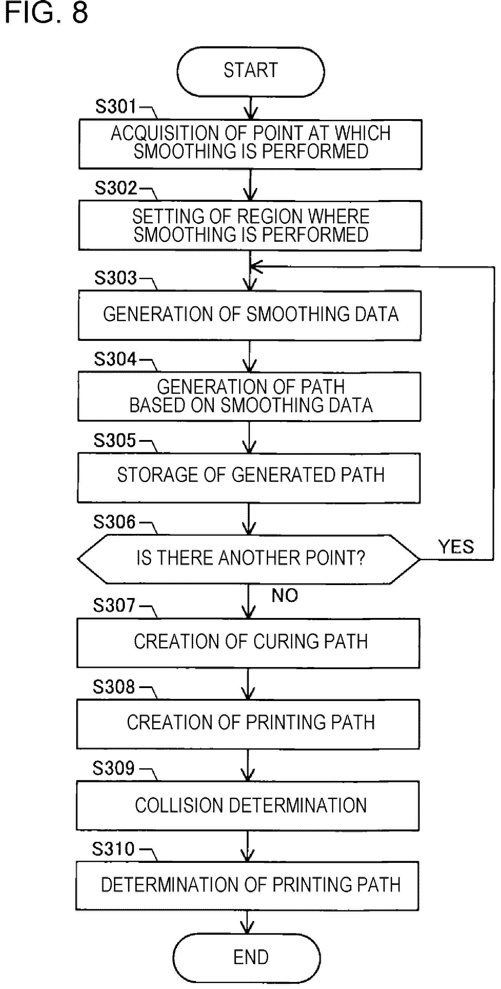

In step S300, a printing path RU described later is created. Details of creating the printing path RU will be described later with reference to FIGS. 8 to 18.

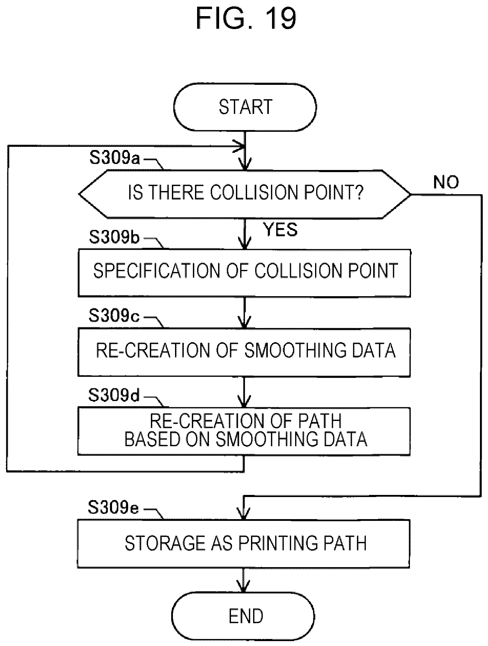

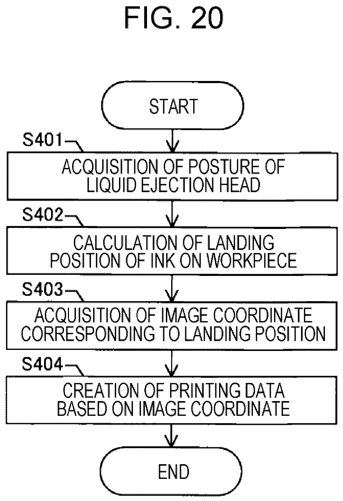

In step S400, printing data Img is created. Details of creating the printing data Img will be described later with reference to FIGS. 19 and 20.

In step S500, the printing path RU is stored as the printing path information Da.

Hereinafter, each step of the path generation method according to the present embodiment will be described in detail in order.

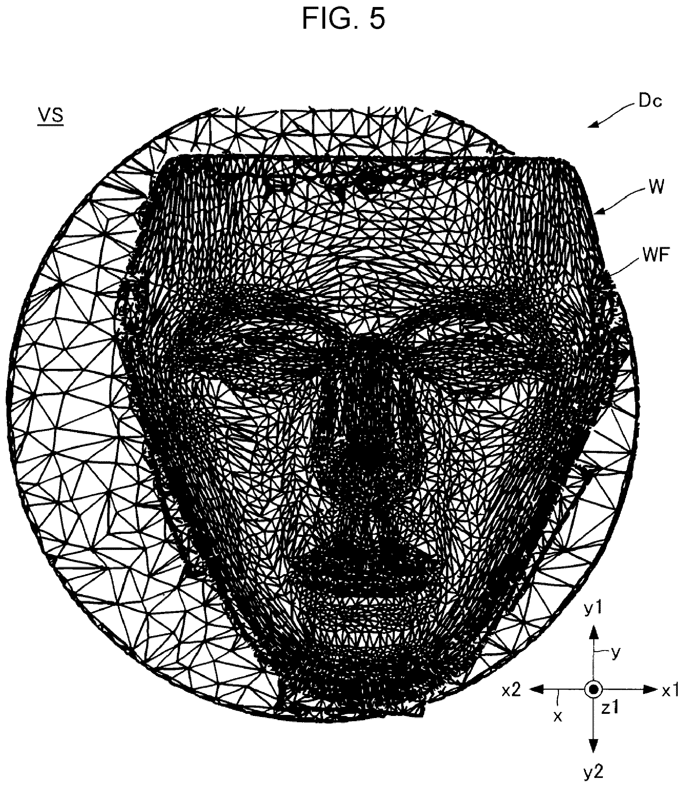

FIG. 5 is a diagram illustrating an example of a shape indicated by the workpiece data Dc. FIG. 5 illustrates an aspect in which the shape indicated by the workpiece data Dc is a human face shape and the workpiece data Dc is polygon data.

In FIG. 5, the workpiece W in the virtual space VS is illustrated. In the virtual space VS, a coordinate system is set with mutually intersecting x axis, y axis, and z axis as coordinate axes. Here, the x axis, the y axis, and the z axis correspond to the coordinate axes of the workpiece coordinate system, and are appropriately associated with the world coordinate system or the robot coordinate system by calibration or the like. Specifically, the x axis corresponds to the X axis, one direction along the x axis is an x1 direction, and the direction opposite to the x1 direction is an x2 direction. The y axis corresponds to the Y axis, and directions opposite to each other along the y axis are a y1 direction and a y2 direction. The z axis corresponds to the Z axis, and directions opposite to each other along the z axis are a z1 direction and a z2 direction. The x axis, although the y axis, and the z axis are typically orthogonal to each other, the configuration is not limited thereto, and all of these may intersect with each other at an angle within a range equal to or more than 80° and equal to or less than 100°.

The workpiece data Dc acquired in step S100 is represented by, for example, a plurality of polygons as illustrated in FIG. 5. In the example illustrated in FIG. 5, since the shape indicated by the workpiece data Dc is a human face shape, the printing surface WF has an uneven shape corresponding to the human face shape. The uneven shape includes a projected portion C1 and a recessed portions C2 and C3, which will be described later. Here, the front direction of the human face indicated by the workpiece data Dc is the z1 direction, the left-right direction of the human face is the direction along the x axis, and the up-down direction of the human face is the direction along the y axis.

FIG. 6 is a diagram for describing the generation of the temporary path LM. FIG. 7 is a diagram for describing a relationship between the temporary path LM and the workpiece W. In FIGS. 6 and 7, the workpiece W and the temporary path LM in the virtual space VS are illustrated.

In step S200, as illustrated by a two-dot chain line in FIG. 6, the plurality of temporary paths LM indicating a change in the relative position between the workpiece W and the liquid ejection head 3a are created in the virtual space VS. In the example illustrated in FIG. 6, when viewed in the direction along the z axis, the plurality of the temporary paths LM along the x axis are arranged in the direction along the y axis. Here, each of the temporary paths LM extends in the left-right direction of the human face indicated by the workpiece data Dc. The extending direction of the temporary path LM is not limited to the example illustrated in FIG. 6, and may be, for example, the up-down direction of the human face indicated by the workpiece data Dc, or a direction inclined with respect to the left-right direction or the up-down direction of the human face indicated by the workpiece data Dc. In addition, the number of the temporary paths LM and the size of the gap between the plurality of temporary paths LM are not limited to the example illustrated in FIG. 6, and are optional.

Each of the temporary paths LM is positioned on the same virtual plane over the entire region. In the example illustrated in FIG. 6, each of the temporary paths LM is positioned on a virtual plane orthogonal to the y axis over the entire region. In addition, as illustrated in FIG. 7, each of the temporary paths LM is positioned on the printing surface WF. In FIG. 7, among the plurality of temporary paths LM illustrated in FIG. 6, the temporary path LM passing through the vicinity of a top portion of the nose of the human face shape of the printing surface WF is illustrated together with the cross section of the workpiece W. In the cross section, the printing surface WF has the projected portion C1 formed by the nose, and the recessed portions C2 and C3 provided on both sides of the projected portion C1.

In addition, in step S200, as indicated by a one-dot chain line in FIG. 6, the printing region RP, which is the region on the printing surface WF to be printed, is set. After the plurality of temporary paths LM are created as described above, in printing on the printing region RP, the temporary path LM in which the amount of change in the posture of the liquid ejection head 3a, the number of times of the printing path, or the like is optimized may be selected from the plurality of temporary paths LM described above. In this case, for example, the temporary path LM in which the amount of change in the posture of the liquid ejection head 3a, the amount of change in the landing angle of the ink on the printing surface WF, and the distance between the liquid ejection head 3a and the workpiece W are as short as possible is selected. In addition, in this case, a plurality of the temporary paths LM with a combination of the number of printing paths as small as possible are selected.

Hereinafter, among the plurality of temporary paths LM illustrated in FIG. 6, the temporary path LM passing through the vicinity of the top portion of the nose of the human face shape of the printing surface WF will be typically described. When printing is performed with the plurality of paths, the following processing is similarly performed for each of the plurality of the temporary paths LM corresponding to the plurality of paths.

FIG. 8 is a diagram illustrating a flow of generating the printing path RU in the first embodiment. FIG. 8 illustrates a flow of processing in step S300 illustrated in FIG. 4 described above. Step S300 includes step S301 to step S310 as illustrated in FIG. 8.

Specifically, in step S300, first, in step S301, the control portion 8 acquires a point Pa described later at which the smoothing processing is performed on the printing surface WF.

After step S301, in step S302, the control portion 8 sets a region RL (described above) where the smoothing processing is performed on the printing surface WF.

After step S302, in step S303, the control portion 8 generates the smoothing data De by performing the smoothing processing on the printing surface WF for each point Pa described later and for each region RL described later.

After step S303, in step S304, the control portion 8 generates a path RUa described later based on the smoothing data De.

After step S304, in step S305, the control portion 8 stores the path RUa described later obtained in step S304.

After step S305, in step S306, the control portion 8 determines whether or not there is another point Pa (described later) at which the smoothing processing is not performed. When there is another point Pa (step S306: YES), the control portion 8 returns to step S303 described above. As a result, the smoothing processing is performed for all the points Pa.

When there is no other point Pa (step S306: NO), in step S307, the control portion 8 creates a curing path RUc described later. In the present embodiment, in step S307, in addition to the curing path RUc described later, an auxiliary traveling path RUb described later is created.

After step S307, in step S308, the control portion 8 creates a printing path RU described later.

After step S308, in step S309, the control portion 8 performs a collision determination of whether or not the head unit 3 collides with the workpiece W when the printing path RU created in step S308 is used.

After step S309, in step S310, the control portion 8 determines the printing path RU, along which it is determined in step S309 that the head unit 3 does not collide with the workpiece W, as the path indicated by the printing path information Da. In step S310, the printing path RU created in step S308 may be determined as the path indicated by the printing path information Da, and as necessary, the path obtained by performing correction such as polynomial approximation or spline interpolation on the printing path RU created in step S308 may be determined as the path indicated by the printing path information Da.

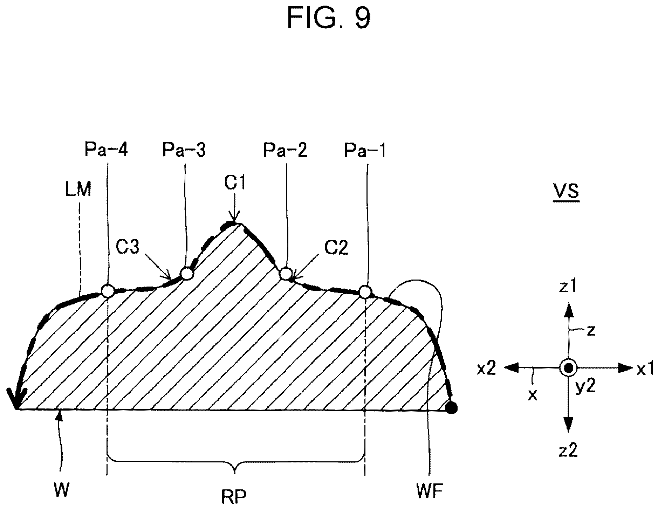

FIG. 9 is a diagram for describing a first point Pa-1, a second point Pa-2, a third point aM-3, and a fourth point Pa-4 at which the smoothing is performed. Each of the first point Pa-1, the second point Pa-2, the third point aM-3, and the fourth point Pa-4 may be referred to as a point Pa without distinguishing the points.

The first point Pa-1 is an intersection of the temporary path LM and an edge of the printing region RP on the x1 direction side. The second point Pa-2 is a point on the temporary path LM in the vicinity of a bottom portion of the recessed portion C2. The third point Pa-3 is a point on the temporary path LM in the vicinity of a bottom portion of the recessed portion C3. The fourth point Pa-4 is an intersection of the temporary path LM and an edge of the printing region RP on the x2 direction side.

In FIG. 9, four points Pa are typically illustrated, and the number of points Pa is not limited to the example illustrated in FIG. 9. A plurality of points that define the temporary path LM may be used, or a point that interpolates a plurality of points may be used for the point Pa. For example, each of the plurality of points is an intersection of a side of a polygon indicated by the workpiece data Dc and a virtual plane including the temporary path LM.

The position of each point Pa is not limited to the example illustrated in FIG. 9, and may be, for example, disposed such that a part of the temporary path LM is not smoothed. For example, since the shape does not change before and after the processing even when the smoothing processing is performed on the flat part of the printing surface WF, the smoothing processing may not be performed. In this case, the smoothing processing may be performed only on an uneven portion of the printing surface WF.

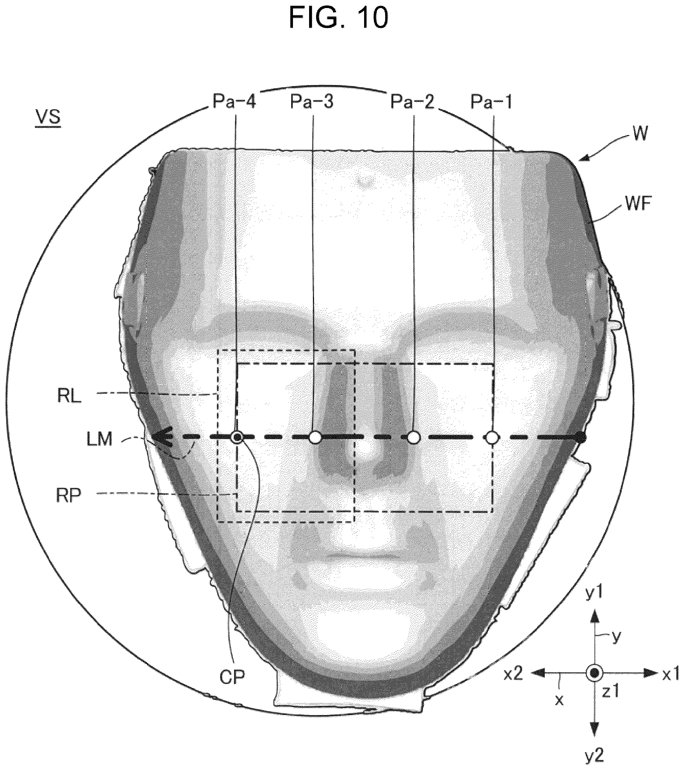

FIG. 10 is a diagram for describing a relationship between the point Pa at which smoothing is performed and the region RL where the smoothing is performed. In FIG. 10, the region RL when the smoothing is performed at the fourth point Pa-4 is illustrated. As illustrated in FIG. 10, the region RL is a region extending in the main scanning direction, which is the extending direction of the temporary path LM, and in the sub-scanning direction, which is the direction orthogonal to the main scanning direction, and is based on the center CP of the nozzle surface FN. In the example illustrated in FIG. 10, the region RL forms a quadrangle having a pair of sides extending in the main scanning direction and a pair of sides extending in the sub-scanning direction. The shape of the region RL is not limited to the example illustrated in FIG. 10, and is optional. However, as will be described later, it is preferable that the shape of the region RL is a shape corresponding to the shape of the head unit 3.

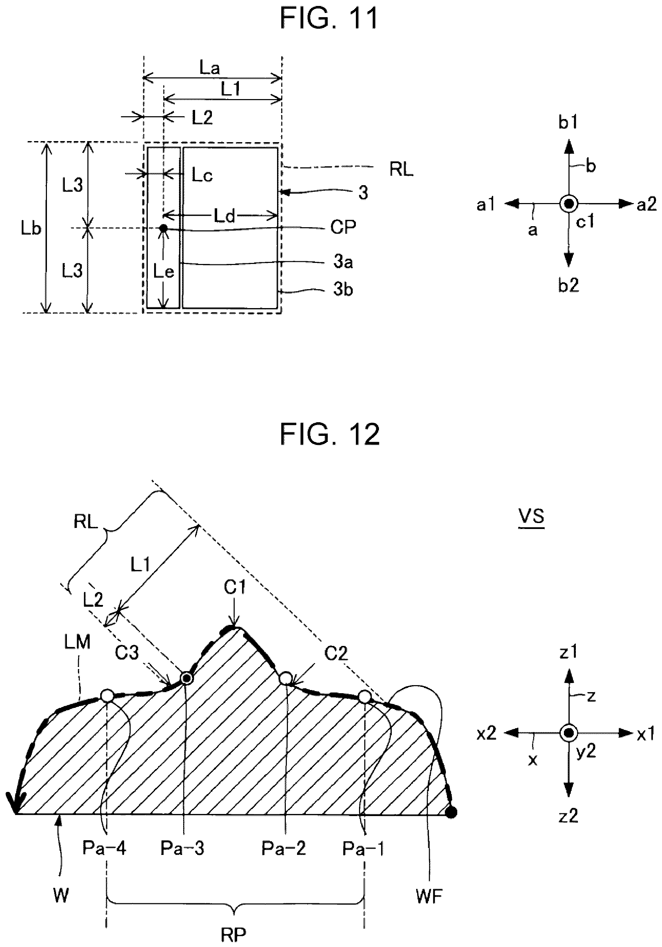

FIG. 11 is a diagram for describing a relationship between the region RL where the smoothing is performed and the head unit 3. FIG. 11 illustrates the relationship between the region RL based on the a-axis, the b-axis, and the c-axis corresponding to the coordinate axes of the tool coordinate system and the head unit 3. The size of the head unit 3 illustrated in FIG. 11 corresponds to the size of the end surface of the head unit 3 in the c1 direction, that is, the size of the surface including the nozzle surface FN and the irradiation surface FL.

As illustrated in FIG. 11, the region RL forms a quadrangle having a pair of sides along the a-axis and a pair of sides along the b-axis when viewed based on the a-axis, the b-axis, and the c-axis.

A length La of the region RL in the direction along the a-axis is longer than a length of the head unit 3 in the direction along the a-axis. In addition, a length Lb of the region RL in the direction along the b-axis is longer than the length of the head unit 3 in the direction along the b-axis.

As described above, the region RL is based on the center CP of the nozzle surface FN. Here, a length L1 between the center CP and the end of the region RL in the a2 direction is longer than a length Ld between the center CP and the end of the head unit 3 in the a2 direction. A length L2 between the center CP and the end of the region RL in the a1 direction is longer than a length Lc between the center CP and the end of the head unit 3 in the a1 direction. A length L3 between the center CP and the end of the region RL in the b1 direction or the b2 direction is longer than a length Le between the center CP and the end of the head unit 3 in the b1 direction or the b2 direction. That is, the region RL is set to include the bottom surface of the head unit 3 in the c1 direction.

Each of the lengths L1, L2, and L3 is set appropriately. For example, each of the lengths L1, L2, and L3 is determined according to the setting of a distance PG described later, and is set to be smaller as the distance PG increases.

FIG. 12 is a diagram for describing the region RL where the smoothing is performed. In FIG. 12, for convenience of description, the region RL when the smoothing is performed at the third point Pa-3 is illustrated.

As illustrated in FIG. 12, the region RL is a region where the region having the size illustrated in FIG. 11 described above is projected on the printing surface WF in the normal direction on the printing surface WF at the target point Pa. The size of the region RL illustrated in FIG. 11 is the size of the region RL as viewed in the normal direction on the printing surface WF at the target point Pa when the reference center CP is positioned at the target point Pa.

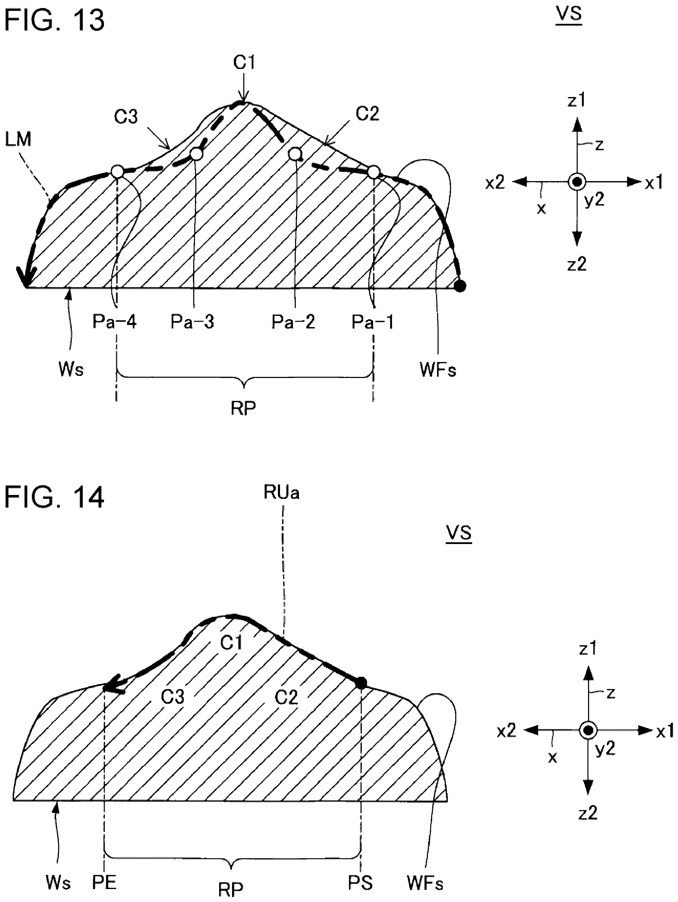

FIG. 13 is a diagram for describing the smoothing. When there are a plurality of points Pa, step S303 is repeatedly executed, and thus the printing surface WF is subjected to the smoothing processing in the region RL for each of the points Pa described above in the virtual space VS. As a result, as illustrated in FIG. 13, the workpiece Ws having a shape in which the depth of the recessed portions C2 and C3 is reduced is obtained. As a result, data indicating the shape of the workpiece Ws is generated as the smoothing data De.

In FIG. 13, the workpiece Ws after the smoothing processing is performed for all the points Pa is illustrated, and the shape of the workpiece Ws gradually changes each time step S303 is executed.

As described above, in step S302, the control portion 8 sets the predetermined region RL, and then, in step S303, the printing surface WF is divided into predetermined regions RL to perform the smoothing processing. As a result, the reproducibility of the shape of the printing surface WF in the smoothing data De can be improved as compared with the aspect in which the smoothing processing is collectively performed on the entire printing surface WF. As a result, the distance PG between the liquid ejection head 3a and the printing surface WF can be reduced. On the other hand, in an aspect in which the smoothing processing is collectively performed on the entire printing surface WF, there is a possibility that the reproducibility of the shape of the printing surface WF in the smoothing data De decreases depending on the shape of the printing surface WF or the like, and the distance PG in the recessed portion increases.

In addition, in step S200, the control portion 8 creates the temporary path LM based on the workpiece data Dc, and then, in step S303, the control portion 8 performs the smoothing processing based on the temporary path LM. As a result, the smoothing processing can be suitably performed along the scanning direction of the liquid ejection head 3a with respect to the printing surface WF.

FIG. 14 is a diagram for describing the path RUa based on the smoothing data De. In FIG. 14, the path RUa generated by executing step S304 after the smoothing processing is performed for all the points Pa is illustrated.

The generation of the path RUa is performed in the same manner as the generation of the temporary path LM, except that the generation is performed based on the shape of the workpiece Ws instead of the shape of the workpiece W. However, the path RUa is generated only for the printing region RP. As a result, as illustrated in FIG. 14, the path RUa based on the workpiece Ws indicated by the smoothing data De is generated for the printing region RP. The data of the generated path RUa is stored in the storage circuit 7a in step S305.

In FIG. 14, the path RUa based on the workpiece Ws after the smoothing processing is performed for all the points Pa is illustrated, and the path RUa gradually changes each time step S304 is executed. In addition, the data of the path RUa stored in step S305 is updated each time step S305 is executed. The finally obtained path RUa is a path over the entire region of the printing region RP from the point PS to the point PE as illustrated in FIG. 14.

The data of the path RUa includes the position and the posture of the liquid ejection head 3a. Here, the posture of the liquid ejection head 3a is determined, for example, such that the normal line of the nozzle surface FN passing through the center CP is orthogonal to the surface of the workpiece Ws at the intersection with the surface. In addition, the path RUa is positioned on the same virtual plane over the entire region, similar to the temporary path LM, and the normal line is also positioned on the virtual plane. The posture of the liquid ejection head 3a may be determined such that the variation in the angle formed by not only the normal line passing through the center CP but also a plurality of normal lines of the nozzle surface FN passing through the plurality of points on the nozzle surface FN and the surface of the workpiece Ws is as small as possible, in other words, the variation in the landing angle of the ink from the plurality of nozzles N to the printing region RP is as small as possible. In this case, the normal line of the nozzle surface FN passing through the center CP may not be positioned on the virtual plane on which the path RUa is positioned over the entire region.

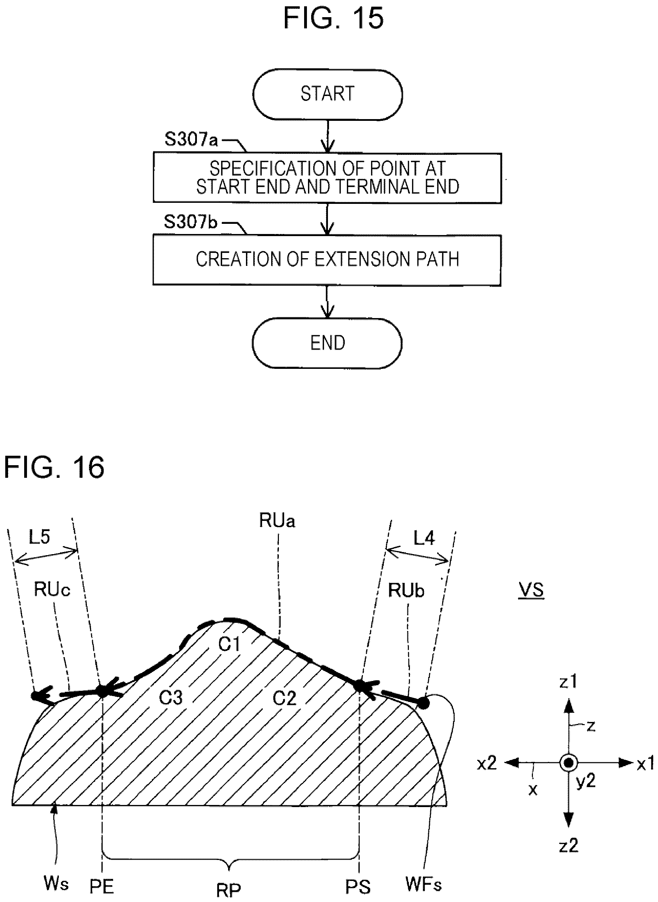

FIG. 15 is a diagram illustrating a flow of generating the curing path RUc. FIG. 15 illustrates a flow of the processing in step S307 illustrated in FIG. 8 described above. Step S307 includes step S307a and step S307b in this order, as illustrated in FIG. 15.

In the present embodiment, the head unit 3 includes the curing portion 3c, and an extension path is created to scan the curing portion 3c to cure the ink ejected by the liquid ejection head 3a at the point PE at a terminal end of the path RUa described above, and to prevent the head unit 3 from colliding with the surface of the workpiece W in front of the point PE. In addition, at the point PS at a start end of the path RUa, an extension path is created such that the moving speed of the liquid ejection head 3a in the path RUa is constant while preventing the curing portion 3c from colliding with the workpiece W when the liquid ejection head 3a is positioned at the point PS at the start end.

Specifically, in step S307a, the control portion 8 specifies the point PE at the terminal end of the path RUa. In the present embodiment, in step S307a, the control portion 8 specifies the point PS at the start end of the path RUa in addition to the point PE.

After step S307a, in step S307b, the control portion 8 creates a curing path RUc described later as the extension path. In the present embodiment, in step S307b, the control portion 8 creates an auxiliary traveling path RUb as an extension path in addition to the curing path RUc.

FIG. 16 is a diagram for describing the curing path RUc. In FIG. 16, in addition to the curing path RUc, the auxiliary traveling path RUb is illustrated.

In step S307a, as illustrated in FIG. 16, the point PE at the terminal end and the point PS at the start end of the path RUa are specified. For example, the point PE is a point positioned foremost in the scanning direction of the liquid ejection head 3a among a plurality of points defining the path RUa. For example, the point PS is a point positioned rearmost in the scanning direction of the liquid ejection head 3a among the plurality of points defining the path RUa.

In step S307b, the curing path RUc is created by extending the path RUa from the point PE. The extending direction is appropriately set. For example, the extending direction may be the same as the direction in the vicinity of the terminal end of the path RUa, or may be a direction away from the workpiece W so as to avoid collision between the head unit 3 and the workpiece W. When the extending direction is the same as the direction in the vicinity of the terminal end of the path RUa, the extending direction may be a direction along a straight line connecting a plurality of points positioned in the vicinity of the terminal end of the path RUa.

A length L5 of the curing path RUc is preferably longer than the length L1 described above. As a result, the curing can be suitably performed by the curing portion 3c over the entire region of the printing region RP.

In addition, in step S307b, the auxiliary traveling path RUb is created by extending the path RUa from the point PS. The extending direction is appropriately set. For example, the extending direction may be the same as the direction in the vicinity of the start end of the path RUa, or may be a direction away from the workpiece W so as to avoid collision between the head unit 3 and the workpiece W. When the extending direction is the same as the direction in the vicinity of the start end of the path RUa, the extending direction may be a direction along a straight line connecting the plurality of points positioned in the vicinity of the start end of the path RUa.

A length L4 of the auxiliary traveling path RUb is preferably longer than the distance at which the moving speed of the liquid ejection head 3a reaches a predetermined speed when the robot 2 starts the operation from the stationary state. As a result, the liquid ejection head 3a can be scanned over the entire region of the printing region RP at a predetermined printing speed.

A step of creating the extension path in step S307 is provided as necessary, and may be omitted as in the second embodiment described later. In addition, the curing path RUc and the auxiliary traveling path RUb may be created together with the creation of the path RUa. In this case, for example, the creating range of the path RUa is set to be wider than the printing region RP, so that the curing path RUc and the auxiliary traveling path RUb can be created.

In addition, when the head unit 3 has a sensor that measures a physical quantity related to the head unit 3, a shape of the workpiece W, a distance between the head unit 3 and the workpiece W, or the like, an extension path for the sensor may be created.

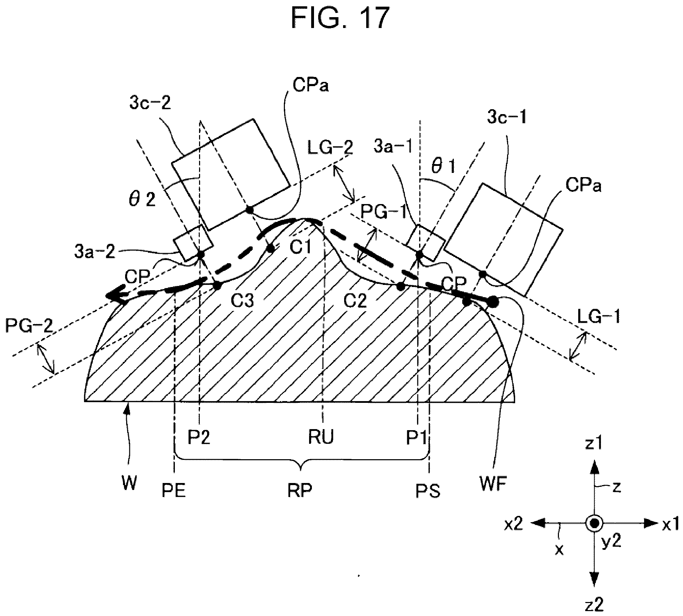

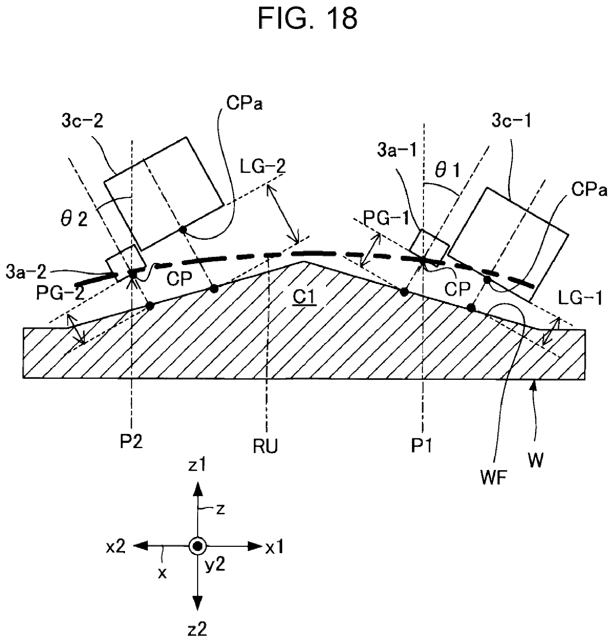

FIG. 17 is a diagram illustrating the printing path RU. In FIG. 17, the printing path RU created in step S308 is illustrated. FIG. 18 is a diagram for describing a first distance PG-1, a second distance PG-2, a third distance LG-1, and a fourth distance LG-2. In FIG. 17, when the printing operation is performed, the liquid ejection head 3a and the curing portion 3c in the printing state with respect to the ascending gradient by the projected portion C1 are illustrated as the liquid ejection head 3a-1 and the curing portion 3c-1, and the liquid ejection head 3a and the curing portion 3c in the printing state with respect to the downward gradient by the projected portion C1 are illustrated as the liquid ejection head 3a-2 and the curing portion 3c-2. In addition, in FIG. 18, for convenience of description, a part of a projected portion C1 portion described later of the workpiece W is illustrated in an enlarged and schematic manner.

When the liquid ejection head 3a is scanned along the printing path RU, the arm portion 220 extends so that the distance from the base portion 210 increases, and the direction among which the arm portion 220 causes the liquid ejection head 3a to scan is optional. For example, the arm portion 220 may operate such that the liquid ejection head 3a is scanned while being contracted so that the distance from the base portion 210 is reduced, or may operate such that the liquid ejection head 3a is scanned along the Y axis so that the distance from the base portion 210 is substantially constant.

In step S308, the printing path RU, which is a path along which the liquid ejection head 3a is moved when the printing operation is performed, is created by combining the path RUa finally created in step S304 and the curing path RUc and the auxiliary traveling path RUb created in step S307, as illustrated in FIG. 17. However, in step S308, one or both of the position and the posture of the liquid ejection head 3a in the printing path RU may be modified as necessary.

As described above, in step S302, when the smoothing processing is performed on the workpiece data Dc indicating the shape of the printing surface WF which is a surface of the workpiece W to be printed, the control portion 8 generates the smoothing data De, and in step S308, creates the printing path RU based on the smoothing data De.

By creating the printing path RU based on the smoothing data De, even when the printing surface WF has an uneven shape, the distance PG between the liquid ejection head 3a and the workpiece W can be reduced while preventing the collision of the liquid ejection head 3a with the workpiece W. In addition, it is possible to create a printing path RU in which the amount of change in the position and the posture of the liquid ejection head 3a is gradual.

In step S301, the control portion 8 acquires the point Pa on the temporary path LM, and in step S303, the control portion 8 performs the smoothing processing for each point Pa on the temporary path LM. As a result, the printing surface WF can be divided into the predetermined regions RL along the scanning direction of the liquid ejection head 3a with respect to the printing surface WF to the smoothing processing. Therefore, the reproducibility of the shape of the printing surface WF in the smoothing data De can be improved as compared with the aspect in which the smoothing processing is collectively performed on the entire printing surface WF. As a result, the distance PG between the liquid ejection head 3a and the printing surface WF can be reduced. In addition, the variation of the distance PG can be reduced. The point Pa on the temporary path LM refers to a point indicating a polygon when the workpiece data Dc is polygon data, or a position of the liquid ejection head 3a on the temporary path LM.

In step S303, when the smoothing processing is performed at each point Pa on the temporary path LM, the control portion 8 performs the smoothing processing on the region RL including the range from each point Pa to a predetermined length L2 forward in the scanning direction, which is the direction along which the liquid ejection head 3a is scanned with respect to the workpiece W along the temporary path LM. That is, the smoothing processing is performed including a region positioned in front of the position of the liquid ejection head 3a. As a result, it is possible to prevent a rapid change in the position and the posture of the liquid ejection head 3a, and it is possible to prevent the amount of change in the position and the posture of the liquid ejection head 3a.

As described above, in the scanning direction, the predetermined length L2 is longer than the length Lc from the center CP of the nozzle surface FN of the liquid ejection head 3a to the end. That is, the smoothing processing is performed including a region positioned in front of the length of the liquid ejection head 3a. As a result, it is possible to prevent a rapid change in the position and the posture of the liquid ejection head 3a, and it is possible to prevent the amount of change in the position and the posture of the liquid ejection head 3a.

In addition, as described above, when the smoothing processing is performed at each point Pa on the temporary path LM, the control portion 8 performs the smoothing processing on the region RL including the range from each point Pa rearward in the scanning direction up to the length L1 corresponding to the length Ld of the curing portion 3c. As a result, it is possible to prevent the collision between the curing portion 3c and the workpiece W.

Furthermore, as described above, in step S303, the control portion 8 performs the smoothing processing on the region in front of the front end of the printing region RP in the scanning direction, which is the direction along which the liquid ejection head 3a is scanned with respect to the workpiece W along the temporary path LM. As a result, it is possible to prevent the collision between the unevenness in front of the printing surface WF of the workpiece W and the liquid ejection head 3a.

In addition, it is preferable that the control portion 8 can adjust the size of the region RL where the smoothing processing is performed. As a result, the size of the region RL where the smoothing processing is performed can be adjusted, and thus the usability is good. For example, when a structure supported by the tip end portion E of the robot 2 is replaced, even when the dimension of the structure differs before and after the replacement or the deviation due to the tolerance of the structure occurs, since the size of the region RL where the smoothing processing is performed is adjusted, the smoothing processing can be appropriately performed.

Furthermore, in step S303, when the smoothing processing is performed at each point Pa on the temporary path LM, the control portion 8 corrects the posture of the liquid ejection head 3a such that the perpendicular line of the nozzle surface FN of the liquid ejection head 3a positioned at each point Pa is perpendicular to the surface indicated by the smoothing data De when the printing path RU is created in step S308. As a result, since the posture of the liquid ejection head 3a is corrected so that the nozzle surface FN is horizontal with respect to the surface indicated by the smoothing data De, the collision between the liquid ejection head 3a and the workpiece W can be suitably prevented.

In addition, when the liquid ejection head 3a is scanned with respect to the printing surface WF along the printing path RU, the distance PG between the printing surface WF and the liquid ejection head 3a is equal to or more than preferably 1 mm and equal to or less than 15 mm or less, and more preferably equal to or more than 1 mm or more and equal to or less than 10 mm. As a result, it is possible to prevent the landing deviation of the liquid from the liquid ejection head 3a to the printing surface WF. On the other hand, when the distance PG is shorter than 1 mm, there is a possibility that the liquid ejection head 3a collides with the workpiece W due to the tolerance, the positional displacement, and the like of the arm portion 220 and the head unit 3. In addition, the printing quality tends to deteriorate when the distance PG is longer than 15 mm. Therefore, it is preferable that the parameters of the smoothing processing described above are set such that the distance PG is equal to or more than 1 mm and equal to or less than 15 mm. In addition, when the distance PG is equal to or less than 10 mm, since the influence of the air flow between the liquid ejection head 3a and the workpiece W can be prevented, it is more preferable that the distance PG is equal to or less than 10 mm.

The distance PG is not limited to this range, and can be appropriately changed in consideration of the type of ink, the ejection rate, the degree of air flow generation, and the like, but it is preferable that the distance is as short as possible.

The printing path RU is positioned on the same virtual plane over the entire region, similar to the temporary path LM. As a result, it is possible to prevent the meandering of the liquid ejection head 3a in the sub-scanning direction intersecting the scanning direction.

The liquid ejection head 3a-1 illustrated in FIG. 18 is the liquid ejection head 3a at the first position P1 in which the liquid ejection head 3a directs upward so as to approach a top portion of the projected portion C1 in the scanning direction when the printing operation is performed. The liquid ejection head 3a-2 is the liquid ejection head 3a at the second position P2 in which the liquid ejection head 3a directs downward so as to be away from the top portion of the projected portion C1 in the scanning direction when the printing operation is performed. The first distance PG-1, which is the distance PG between the liquid ejection head 3a-1 and the workpiece W, is longer than the second distance PG-2, which is the distance PG between the liquid ejection head 3a-2 and the workpiece W.

As described above, in the printing method using the three-dimensional object printing apparatus 1, the first distance PG-1 is longer than the second distance PG-2 when performing the printing operation. As a result, it is possible to prevent the collision between the head unit 3 and the surface of the workpiece W. In addition, by reducing the second distance PG-2, it is also possible to improve the printing quality when the liquid ejection head 3a is scanned with respect to the workpiece W so as to be away from the top portion of the projected portion C1.

Here, when the liquid ejection head 3a is scanned with respect to the workpiece W so as to be away from the top portion of the projected portion C1, the rear end of the head unit 3 is away from the surface of the workpiece W in the scanning direction. Therefore, the contact between the head unit 3 and the surface of the workpiece W is unlikely to occur. Therefore, even when the second distance PG-2 is shorter than the first distance PG-1, the collision between the head unit 3 and the surface of the workpiece W can be prevented. On the other hand, when the liquid ejection head 3a is scanned on the workpiece W so as to approach the top portion of the projected portion C1, the rear end of the head unit 3 in the scanning direction approaches the surface of the workpiece W. Therefore, in the aspect in which the first distance PG-1 and the second distance PG-2 are equal to each other, the contact between the head unit 3 and the surface of the workpiece W is likely to occur. On the other hand, by making the first distance PG-1 longer than the second distance PG-2, the collision between the head unit 3 and the surface of the workpiece W is prevented. The distance PG between the liquid ejection head 3a and the workpiece W refers to the distance between the center CP of the nozzle surface FN and the workpiece W in the normal direction of the nozzle surface FN.

A first angle θ1, which is the absolute value of the inclination angle of the liquid ejection head 3a-1 with respect to the workpiece W, is equal to a second angle θ2, which is the absolute value of the inclination angle of the liquid ejection head 3a-2 with respect to the workpiece W. The first angle θ1 is an angle formed by a normal line of the nozzle surface FN passing through the center CP of the nozzle surface FN of the liquid ejection head 3a-1 and the vertical axis or the z axis, when viewed on a plane including the printing path RU. The second angle θ2 is an angle formed by the normal line of the nozzle surface FN passing through the center CP of the nozzle surface FN of the liquid ejection head 3a-2 and the vertical axis or the z axis, when viewed on a plane including the printing path RU.

For example, when each of the first angle θ1 and the second angle θ2 is 30°, the first distance PG-1 is approximately 9 mm, and the second distance PG-2 is approximately 4 mm.

As described above, the head unit 3 includes the curing portion 3c. Here, the curing portion 3c is provided at a position where the irradiation surface FL is separated from the nozzle surface FN of the workpiece W. As a result, it is possible to reduce the distance PG between the liquid ejection head 3a and the workpiece W and to prevent the collision between the curing portion 3c and the surface of the workpiece W. The curing portion 3c may be provided such that the distance between the irradiation surface FL and the workpiece W is the same as the distance between the nozzle surface FN and the workpiece.

The third distance LG-1, which is the distance LG between the curing portion 3c and the workpiece W at the first position P1, is shorter than the fourth distance LG-2, which is the distance LG between the curing portion 3c and the workpiece W at the second position P2. As a result, it is possible to prevent the deterioration of the printing quality. On the other hand, in the aspect in which the third distance LG-1 is equal to or more than the fourth distance LG-2, the first distance PG-1 may be too large, and thus there is a possibility that the printing quality may deteriorate. The distance LG between the curing portion 3c and the workpiece W refers to the distance between the center CPa of the irradiation surface FL of the curing portion 3c and the workpiece W in the irradiation direction of the curing portion 3c.

It is preferable that the difference between the first distance PG-1 and the second distance PG-2 is smaller than the difference between the third distance LG-1 and the fourth distance LG-2. That is, during the printing operation, it is preferable that the amount of change in the distance PG is smaller than the amount of change in the distance LG. As a result, it is possible to prevent the landing deviation due to the shaking of the liquid ejection head 3a.

In creating the printing path RU, the control portion 8 sets the posture of the head unit 3 such that the angle formed by the perpendicular line of the nozzle surface FN of the liquid ejection head 3a and the surface indicated by the smoothing data De is closer to 90 degrees than the angle formed by the perpendicular line of the irradiation surface FL of the curing portion 3c and the surface indicated by the smoothing data De. As a result, it is possible to more reliably prevent the collision between the liquid ejection head 3a and the workpiece W.

FIG. 19 is a diagram illustrating a flow of the collision determination in step S309. In step S309, first, as illustrated in FIG. 19, in step S309a, the control portion 8 determines whether or not there is a collision point between the workpiece W and the head unit 3 when the head unit 3 is moved by using the printing path RU. For example, in the virtual space VS, the determination is made by simulating the movement of the head unit 3 with respect to the workpiece W when the printing path RU is used, and determining whether or not there is an intersection between the workpiece W and the head unit 3.

When there is a collision point between the workpiece W and the head unit 3 (step S309a: YES), in step S309b, the control portion 8 specifies the collision point. This specification is performed, for example, by obtaining an intersection between the workpiece W and the head unit 3 in the virtual space VS in the simulation described above.

After step S309b, in step S309c, the control portion 8 re-creates the smoothing data De. The re-creation is performed by changing the correction value for the smoothing processing for the specified collision point and executing the same processing as step S303 described above again. That is, the re-creation is performed on the workpiece data Dc in the same manner as in step S303, except that the correction value for the smoothing processing is different for the specified collision point. In step S309c, the smoothing processing may be performed on the smoothing data De.

The correction value for the smoothing processing refers to a value that defines the size of the region RL described above. In addition, another correction value in the smoothing processing may be adjusted.

After step S309c, in step S309d, the control portion 8 re-creates the printing path RU based on the smoothing data De re-created in step S309c. This re-creation is performed by executing the same processing as in step S304 and step S307 described above again, except that the smoothing data De re-created in step S309c is used.

After step S309d, the control portion 8 returns to step S309a. Therefore, steps S309a to S309d are repeatedly performed until the collision point between the workpiece W and the head unit 3 is eliminated (step S309a: YES).

When there is no collision point between the workpiece W and the head unit 3 (step S309a: NO), in step S309e, the control portion 8 stores the printing path RU in which there is no collision point between the workpiece W and the head unit 3 in the storage circuit 7a, and ends step S309.

In the example illustrated in FIG. 19, as described above, although the printing path RU is re-created until the collision point between the workpiece W and the head unit 3 is eliminated, the present disclosure is not limited thereto. When there is a collision point between the workpiece W and the head unit 3 (step S309a: YES), the control portion 8 may display an error to prompt the user to change the setting of the temporary path LM or the like. In this case, the printing path RU can be re-created after changing the orientation of the workpiece W, the printing direction, the number of printing paths, or the like. In addition, step S309b may be provided as necessary and may be omitted. In this case, in step S309c, the smoothing processing may be performed over the entire region.

As described above, in step S309, the control portion 8 performs a collision determination to determine the presence or absence of the collision between the liquid ejection head 3a and the workpiece W when the liquid ejection head 3a is scanned with respect to the printing surface WF along the printing path RU. As a result, when it is determined that there is a collision between the liquid ejection head 3a and the workpiece W, the printing path RU can be created again. As a result, it is possible to avoid the collision between the liquid ejection head 3a and the workpiece W.

In addition, in the collision determination, when it is determined that the liquid ejection head 3a and the workpiece W collide (step S309a: YES), the control portion 8 performs the smoothing processing again after adjusting the correction value in the smoothing processing in step S309c. As a result, it is possible to create a printing path RU that can avoid the collision between the liquid ejection head 3a and the workpiece W.

Furthermore, in step S309c, the control portion 8 may adjust the correction value in the smoothing processing in accordance with the first amount of change, which is the amount of change in the distance PG between the liquid ejection head 3a and the workpiece W, or the second amount of change, which is the amount of change in the posture of the liquid ejection head 3a with respect to the workpiece W, and may perform the smoothing processing again. The control portion 8 acquires the first amount of change and the second amount of change when the liquid ejection head 3a is scanned with respect to the printing surface WF along the printing path RU, and when one or both of the first amount of change and the second amount of change is greater than a predetermined value, the control portion 8 adjusts the correction value in the smoothing processing and performs the smoothing processing again in step S309c.

When the first amount of change is greater than a predetermined value, the control portion 8 may reduce the size of the region RL where the smoothing processing is performed as the adjustment of the correction value in the smoothing processing. In this case, since the reproducibility of the printing surface WF in the region RL is improved, the distance PG can be appropriately adjusted. In addition, when the second amount of change is greater than the predetermined value, the control portion 8 may increase the size of the region RL where the smoothing processing is performed as the adjustment of correction value in the smoothing processing. In this case, it is possible to create a gradual printing path, and to reduce the second amount of change. The adjustment may be performed by inputting a correction value by the user, or may be automatically performed by the program.

In addition, when the second amount of change is equal to or greater than a predetermined value, the control portion 8 may divide the path in the main scanning direction or change the orientation of the workpiece W to be printed for each path. For example, when the second amount of change is equal to or more than 65°, the processing of dividing the path in the main scanning direction may be performed.

FIG. 20 is a diagram illustrating a flow of generating the printing data Img in step S400. Step S400 includes steps S401 to S404 in this order, as illustrated in FIG. 20.

Specifically, first, in step S401, the control portion 8 acquires the posture of the liquid ejection head 3a for each position on the printing path RU based on the printing path information Da.

After step S401, in step S402, the control portion 8 calculates a landing position of the liquid ejection head 3a on the workpiece W from each of the nozzles N of the liquid ejection head 3a for each position on the printing path RU based on the posture of the liquid ejection head 3a for each position on the printing path RU.

After step S402, in step S403, the control portion 8 acquires image coordinates of the pixel of the image data Dd corresponding to the landing position calculated in step S402.

After step S403, in step S404, the control portion 8 creates the printing data Img based on the image coordinates acquired in step S403.

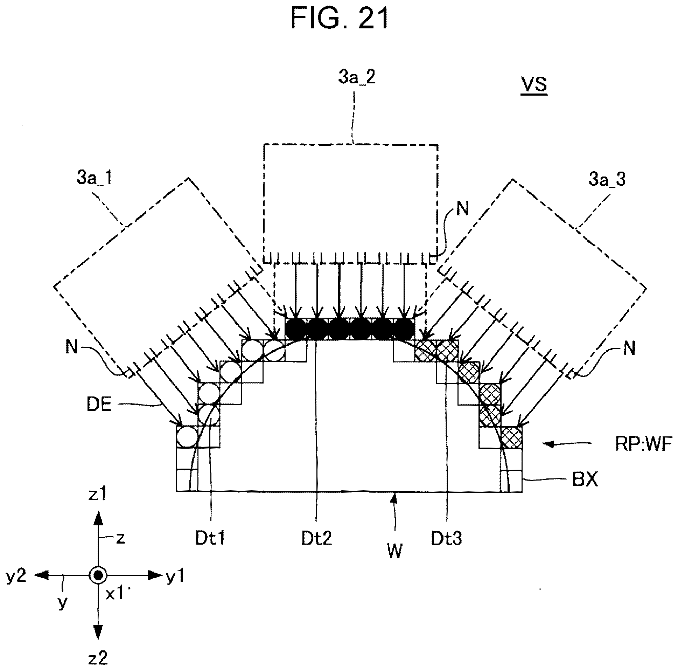

FIG. 21 is a diagram for describing the correspondence relationship between the image data Dd and the printing data Img. FIG. 21 illustrates the relationship between the plurality of nozzles N of each of the liquid ejection heads 3a_1 to 3a_3 of different paths and the landing position of the ink on the workpiece W when the image indicated by the image data Dd is printed on the printing surface WF by a plurality of paths. In FIG. 21, for convenience of description, the shape of the printing surface WF is schematically illustrated.

As illustrated in FIG. 21, in step S400, in the virtual space VS, for each printing path RU indicated by the printing path information Da, an intersection of the virtual line extending from the printing region RP and each of the nozzles N of the liquid ejection head 3a in the ejection direction DE is obtained as a landing position, and the printing data Img for each printing path RU indicated by the printing path information Da is generated based on the intersection. As described above, the printing data Img is generated by associating the nozzle N at each position in the printing path RU with the pixels of the image indicated by the image data Dd. In the present embodiment, since the calculation is performed on the premise that the ink flies linearly, the ejection direction DE is the normal direction of the nozzle surface FN. However, the intersection may be calculated by correcting the landing deviation due to the posture of the liquid ejection head 3a, the ink mass, and the like.

The intersection corresponds to the landing position of the ink from the liquid ejection head 3a, and is obtained in step S402. In step S403, the color data or the gradation data corresponding to the intersection is extracted from the three-dimensional image information of the image data Dd for each printing path RU as the image coordinates. In step S404, the three-dimensional image information is divided for each printing operation of each path, and the divided three-dimensional image information is color-converted and binarized as necessary to generate the printing data Img.

Here, the printing region RP is quantized into a plurality of voxel BX in the virtual space VS as illustrated in FIG. 21. Each voxel BX is a cube, each voxel has a side of the same length, and is continuously disposed three-dimensionally along the printing region RP in the virtual space VS. It is preferable that the length of the side of the voxel BX is appropriately adjusted according to a print resolution. The printing region RP is divided into regions of each printing path with the voxel BX as a unit based on the quantization to the voxel BX and the intersection described above corresponding to the ink landing position. Here, the exclusive processing is performed such that one dot of ink from one nozzle N belongs to each voxel BX.

The unit of the exclusive processing between the dots is not limited to the voxel BX. For example, the pixels in the two-dimensional image described above, which is the planar image data, may be used instead of the voxel BX. In this case, by performing the exclusive processing such that one dot by the ink from one nozzle N belongs to a pixel which is two-dimensionally arranged, the three-dimensional image information included in the image data Dd is divided for each printing operation. In this case, it is necessary that a pixel of the three-dimensional image and a pixel of the two-dimensional image described above are associated with each other.

In addition, as a unit for the exclusive processing between the dots, particles may be used instead of the voxels BX. In this case, the printing region RP is represented by a plurality of particles in the virtual space VS. Preferably, each particle is a sphere, and all the particles have the same radius, and are three-dimensionally disposed along the printing region RP. It is preferable that the radius of the particle is appropriately adjusted according to the print resolution. The center of the particles indicates a position where the dots are disposed, and the center of the particles is disposed based on the intersection between the printing region RP and a virtual line extending in the ejection direction DE from each of the nozzles N of the liquid ejection head 3a in the virtual space VS. In addition, while another particle is allowed to be disposed at an outside of a radius of a certain particle, a part of the other particle is not allowed to enter inside of the radius of the certain particle, and the other particle is excluded. That is, the surface of the printing region RP is filled with a plurality of particles, and the positions of the individual particles dynamically change according to the shape of the printing region RP and the individual disposition order. The particles defined in this manner can smoothly represent the curved surface of the printing region RP as compared with the voxel BX described above, and moire can be prevented from occurring in a printing image formed by the three-dimensional object printing apparatus 1.

In the example illustrated in FIG. 21, the three-dimensional image information of the image data Dd is divided into three-dimensional image information corresponding to a plurality of voxels BX to which the dot Dt1 formed by the ink from the liquid ejection head 3a_1 belongs, three-dimensional image information corresponding to a plurality of voxels BX to which the dot Dt2 formed by the ink from the liquid ejection head 3a_2 belongs, and three-dimensional image information corresponding to a plurality of voxels BX to which the dot Dt3 formed by the ink from the liquid ejection head 3a_3 belongs.

The three-dimensional image information corresponding to the plurality of voxels BX to which the dots Dt1 formed by the ink from the liquid ejection head 3a_1 belong is used for the printing operation of the first path. The three-dimensional image information corresponding to the plurality of voxels BX to which the dots Dt2 formed by the ink from the liquid ejection head 3a_2 belong is used for the printing operation of the second path adjacent to the first path. The three-dimensional image information corresponding to the plurality of voxels BX to which the dots Dt3 formed by the ink from the liquid ejection head 3a_3 belong is used for the printing operation of the third path adjacent to the second path.

As described above, the printing path RU is created by using the smoothing data De as the reference three-dimensional data, whereas the printing data Img is created by using the workpiece data Dc as the reference three-dimensional data. Here, the printing data Img indicates the ejection operation for each nozzle N of the liquid ejection head 3a in the printing path RU.

As described above, in step S100, the control portion 8 acquires the image data Dd indicating the image to be printed on the printing surface WF, and after the smoothing processing in step S303, in step S400, the control portion 8 adjusts the ejection operation of the liquid ejection head 3a for each nozzle N in the printing path RU based on the printing path RU and the image data Dd. As a result, the landing position of the liquid from the liquid ejection head 3a to the printing surface WF can be suitably adjusted. As a result, it is possible to improve the printing quality.

### 2. Second Embodiment

Hereinafter, a second embodiment of the present disclosure will be described. In the embodiment described below as an example, the reference numerals used in the description of the first embodiment will be assigned to elements having the same effects and functions as those of the first embodiment, and each detailed description thereof will be appropriately omitted.

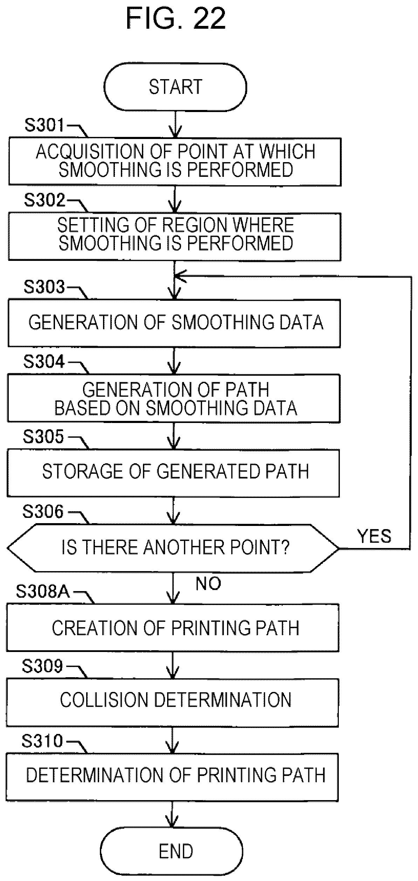

FIG. 22 is a diagram illustrating a flow of generating a printing path in the second embodiment. A path generation method of the present embodiment is the same as step S300 of the first embodiment, except that step S307 is omitted and step S308A is included instead of step S308, in step S300 of the first embodiment described above. In the present embodiment, the curing portion 3c may be omitted. In this case, creating the curing path in Step 307 of the first embodiment is not necessary by omitting the curing portion 3c. In addition, the collision determination in step S309 may be omitted.

In the present embodiment, when there is no other point Pa (step S306: NO), in step S308A, the control portion 8 creates the path RUa finally created in step S304 as the printing path RU.

According to the second embodiment described above, even when the surface of the workpiece W to be printed has unevenness, it is possible to prevent the collision between the liquid ejection head 3a and the workpiece W and to improve the printing quality.

### 3. Modification Example

Each embodiment in the above illustration can be variously modified. Specific modification aspects that can be applied to each of the embodiments described above are exemplified below. Two or more aspects randomly selected from the following examples can be appropriately merged to the extent that these aspects do not contradict each other.

### 3-1. Modification Example 1

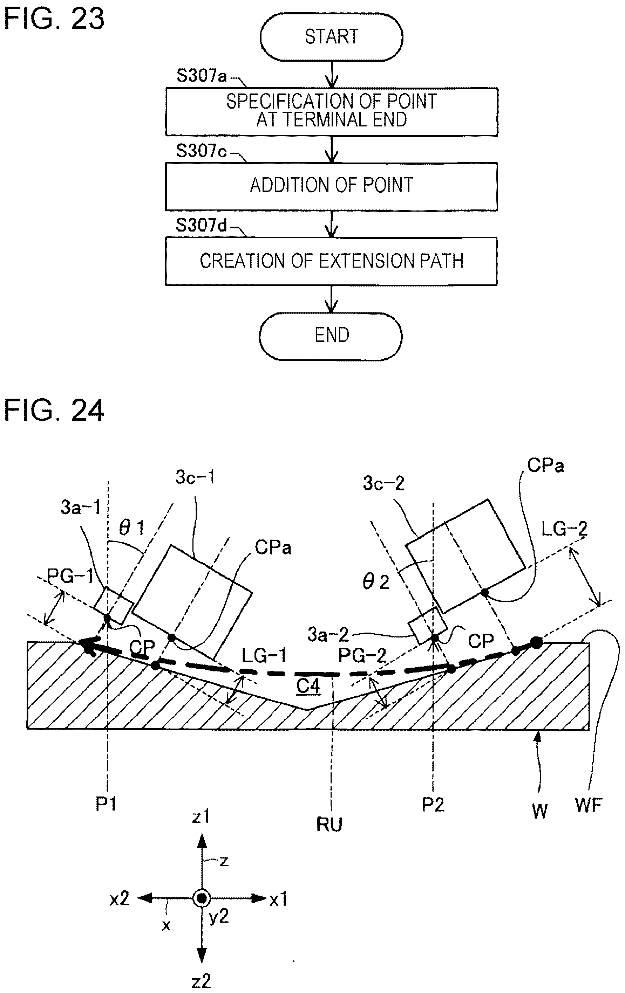

FIG. 23 is a diagram illustrating a flow of generating a curing path RUc in Modification Example 1. The generation of the curing path RUc illustrated in FIG. 23 is the same as step S307 of the first embodiment, except that step S307c and step S307d are included instead of step S307b, in step S307 of the first embodiment described above.

In Modification Example 1, after step S307a, in step S307c, the control portion 8 adds the point Pa where smoothing is performed to the printing surface WF outside the printing region RP. For example, when the curing path RUc is created, the point Pa is added to a position in the scanning direction of the liquid ejection head 3a in front of the printing region RP. In addition, when the auxiliary traveling path RUb is created, the point Pa is added to a position behind the printing region RP in the scanning direction of the liquid ejection head 3a.

After step S307c, in step S307d, the control portion 8 performs the smoothing processing on the printing surface WF at the added point Pa, and then creates a extension path corresponding to the printing surface WF after the smoothing processing by the same method as in step S304.

The smoothing processing may be performed with the center CPa of the irradiation surface FL of the curing portion 3c as a reference for the smoothing. In this case, the posture of the head unit 3 is set such that the angle formed by the perpendicular line of the irradiation surface FL of the curing portion 3c and the surface indicated by the smoothing data De is close to 90 degrees. In this case, the collision of the curing portion 3c with the workpiece W can be further prevented.

### 3-2. Modification Example 2

FIG. 24 is a diagram for describing a printing path RU in Modification Example 2. Modification Example 2 is the same as the first embodiment except that the workpiece W has the recessed portion C4. In FIG. 24, when the printing operation is performed, the liquid ejection head 3a and the curing portion 3c in the printing state with respect to the ascending gradient by the recessed portion C4 are illustrated as the liquid ejection head 3a-1 and the curing portion 3c-1, and the liquid ejection head 3a and the curing portion 3c in the printing state with respect to the downward gradient by the recessed portion C4 are illustrated as the liquid ejection head 3a-2 and the curing portion 3c-2.

In FIG. 24, the liquid ejection head 3a-1 is the liquid ejection head 3a at the first position P1 in which the liquid ejection head 3a directs upward so as to be away from the bottom portion of the recessed portion C4 in the scanning direction when the printing operation is performed. The liquid ejection head 3a-2 is the liquid ejection head 3a at the second position P2 in which the liquid ejection head 3a directs downward so as to approach the bottom portion of the recessed portion C4 in the scanning direction. When the first angle θ1, which is the absolute value of the inclination angle of the liquid ejection head 3a-1 with respect to the workpiece W, and the second angle θ2, which is the absolute value of the inclination angle of the liquid ejection head 3a-2 with respect to the workpiece W, are equal to each other, the first distance PG-1, which is the distance PG between the liquid ejection head 3a-1 and the workpiece W, is longer than the second distance PG-2, which is the distance PG between the liquid ejection head 3a-2 and the workpiece W. In addition, the third distance LG-1, which is the distance LG between the curing portion 3c-1 and the workpiece W, is shorter than the fourth distance LG-2, which is the distance LG between the curing portion 3c-2 and the workpiece W.

As described above, the control portion 8 moves the liquid ejection head 3a such that the first distance PG-1 is longer than the second distance PG-2 and the third distance LG-1 is shorter than the fourth distance LG-2 when the printing operation is performed.

As described above, even when the workpiece W has the recessed portion C4, the first distance PG-1 is longer than the second distance PG-2, so that the collision between the head unit 3 and the surface of the workpiece W can be prevented. In addition, by reducing the second distance PG-2, it is also possible to improve the printing quality when the liquid ejection head 3a is scanned with respect to the workpiece W so as to approach the bottom portion of the recessed portion C4.

Here, when the liquid ejection head 3a is scanned with respect to the workpiece W so as to approach the bottom portion of the recessed portion C4, the rear end of the head unit 3 in the scanning direction is away from the surface of the workpiece W. Therefore, the contact between the head unit 3 and the surface of the workpiece W is unlikely to occur. Therefore, even when the second distance PG-2 is shorter than the first distance PG-1, the collision between the head unit 3 and the surface of the workpiece W can be prevented. On the other hand, when the liquid ejection head 3a is scanned with respect to the workpiece W so as to be away from the bottom portion of the recessed portion C4, the rear end of the head unit 3 in the scanning direction approaches the surface of the workpiece W. Therefore, in the aspect in which the first distance PG-1 and the second distance PG-2 are equal to each other, the contact between the head unit 3 and the surface of the workpiece W is likely to occur. Therefore, by making the first distance PG-1 longer than the second distance PG-2, the collision between the head unit 3 and the surface of the workpiece W is prevented.

### 3-3. Modification Example 3

In the embodiment described above, an aspect of creating the printing path RU from the workpiece data Dc of the polygon data is illustrated, and the present disclosure is not limited to this aspect. For example, the printing path RU may be created by using the workpiece data Dc of the point group data other than the polygon data, or may be created by extracting points on the curve from the workpiece data Dc of the curve data as the point group and based on the extracted points.

### 3-4. Modification Example 4

In the embodiment described above, although an aspect in which the smoothing processing is performed on the workpiece data Dc for each region RL is illustrated, the present disclosure is not limited to this aspect, and the smoothing processing with respect to the workpiece data Dc may be collectively performed on the entire printing surface WF.

For example, on the printing surface WF, the smoothing processing may be collectively performed on the entire printing surface WF when the depth of the recessed portion recessed with respect to the flat surface of the printing surface WF is smaller than a predetermined value, or when the difference between the height of the projected portion protruding with respect to the flat surface of the printing surface WF and the depth of the recessed portion recessed with respect to the flat surface is smaller than a predetermined value. When the flatness of the printing surface WF is high, even when the smoothing processing is collectively performed on the entire printing surface WF, the distance PG between the liquid ejection head 3a and the workpiece W can be maintained in an appropriate range. 3-5. Modification Example 5

In the embodiment described above, although the configuration using the 6-axis vertical multi-axis robot as the robot is described, the configuration is not limited to this configuration. The robot 2 may be, for example, a vertical multi-axis robot other than the 6-axis robot, or a horizontal multi-axis robot. In addition, the arm portion of the robot 2 may have a telescopic mechanism, a linear motion mechanism, or the like in addition to the joint including a rotation mechanism. Meanwhile, from the viewpoint of the balance between the printing quality in the printing operation and the degree of freedom of the robot operation in the non-printing operation, it is preferable that the robot 2 may be a multi-axis robot having 6 axes or more.

### 3-6. Modification Example 6

In the embodiment described above, a configuration using screwing or the like as a method of fixing the liquid ejection head 3a to the robot 2 is exemplified, and the configuration is not limited thereto. For example, the liquid ejection head 3a may be fixed to the robot 2 by gripping the liquid ejection head 3a by a gripping mechanism such as a hand mounted as an end effector of the robot 2.

### 3-7. Modification Example 7

In the embodiment described above, the configuration in which printing is performed by using one type of ink is described. Meanwhile, the configuration is not limited to this configuration, and the present disclosure can be applied to a configuration in which printing is performed by using two or more types of ink.

### 3-8. Modification Example 8

The use of the three-dimensional object printing apparatus 1 of the present disclosure is not limited to image printing. For example, a three-dimensional object printing apparatus 1 that ejects a solution of a coloring material is used as a manufacturing apparatus for forming a color filter of a liquid crystal display apparatus. In addition, a three-dimensional object printing apparatus 1 that ejects a solution of a conductive material is used as a manufacturing apparatus for forming a wiring or an electrode on a wiring substrate. In addition, the three-dimensional object printing apparatus 1 can also be used as a jet dispenser for applying a liquid such as an adhesive to a medium.

### 3-9. Modification Example 9

In the embodiment described above, the smoothing processing is the processing of reducing the depth of the recessed portion included in the processing target region, and for example, the smoothing processing is preferably performed such that the height of the projected portion included in the processing target region is not changed and only the depth of the recessed portion is reduced.

When the height of the projected portion is reduced in the smoothing processing, the distance between the liquid ejection head 3a and the projected portion in the printing operation is reduced, and thus the possibility that the liquid ejection head 3a and the projected portion collide with each other is increased. On the other hand, when the depth of the recessed portion is reduced in the smoothing processing, the distance between the liquid ejection head 3a and the recessed portion during the printing operation can be ensured by a predetermined amount. As a result, the possibility that the liquid ejection head 3a and the recessed portion collide with each other is low.

### 3-10. Modification Example 10

In the embodiment described above, regarding the generation of the printing data Img, although an aspect is illustrated in which the color data or the gradation data corresponding to the intersection is extracted for each printing path RU as the image coordinates from the three-dimensional image information of the image data Dd in step S403, the three-dimensional image information is divided for each printing operation of each path in step S404, and the divided three-dimensional image information is subjected to color conversion and binarization as necessary, the present disclosure is not limited to this aspect. For example, the printing data Img may be generated by generating dot disposition data converted into On/Off data of each color dot by performing color conversion and binarization on the image data Dd and then extracting the On/Off data corresponding to the intersection.

### 4. Appendixes

Hereinafter, appendixes to the present disclosure will be added.

(Appendix 1) According to a first aspect, which is a preferred example of the three-dimensional object printing apparatus of the present disclosure, the apparatus including a liquid ejection head that has a plurality of nozzles ejecting a liquid toward a workpiece, a multi-joint robot that has a tip end portion supporting the liquid ejection head and causes the liquid ejection head to scan with respect to the workpiece, and a control portion that creates a printing path along which the liquid ejection head is scanned, in which the control portion generates smoothing data by performing smoothing processing on workpiece data indicating a shape of a printing surface, which is a surface of the workpiece to be printed, and creates the printing path based on the smoothing data.

In the above aspect, since the printing path is created based on the smoothing data, even when the printing surface has a shape having unevenness, the distance between the liquid ejection head and the printing surface can be reduced while preventing the collision between the liquid ejection head and the printing surface. As a result, it is possible to prevent the deterioration of the printing quality. In addition, it is possible to create a printing path in which the amount of change in the position and the posture of the liquid ejection head is gradual.

(Appendix 2) In a second aspect, which is a preferred example of the first aspect, the control portion divides the printing surface into predetermined regions to perform the smoothing processing. In the above aspect, the reproducibility of the shape of the printing surface in the smoothing data can be improved as compared with the aspect in which the smoothing processing is collectively performed on the entire printing surface. As a result, the distance between the liquid ejection head and the printing surface can be reduced, and the variation can be reduced. On the other hand, in an aspect in which the smoothing processing is collectively performed on the entire printing surface, the reproducibility of the shape of the printing surface in the smoothing data may be lowered depending on the shape of the printing surface or the like. Therefore, there is a possibility that the distance between the liquid ejection head and the printing surface may increase or the variation in the distance may increase.

(Appendix 3) In a third aspect, which is a preferred example of the second aspect, the control portion creates a temporary path based on the workpiece data and performs the smoothing processing based on the temporary path. In the above aspect, the smoothing processing can be suitably performed along the scanning direction of the liquid ejection head with respect to the printing surface.

(Appendix 4) In a fourth aspect, which is a preferred example of the third aspect, the control portion performs the smoothing processing for each point on the temporary path. In the above aspect, the printing surface can be divided into predetermined regions along the scanning direction of the liquid ejection head with respect to the printing surface to perform the smoothing processing. Therefore, the reproducibility of the shape of the printing surface in the smoothing data can be improved as compared with the aspect in which the smoothing processing is collectively performed on the entire printing surface. As a result, the distance between the liquid ejection head and the printing surface can be reduced, and the variation in the distance between the liquid ejection head and the printing surface can be reduced. The point on the temporary path refers to a point indicating a polygon when the workpiece data is polygon data, or a position of the liquid ejection head on the temporary path.

(Appendix 5) In a fifth aspect, which is a preferred example of the fourth aspect, when the smoothing processing is performed at a first point on the temporary path, the control portion performs the smoothing processing on a region including a range from the first point to a predetermined length forward in a scanning direction, which is a direction along which the liquid ejection head is scanned with respect to the workpiece along the temporary path. In the above aspect, the smoothing processing can be performed including the region positioned in front of the position of the liquid ejection head. As a result, it is possible to prevent a rapid change in the position and the posture of the liquid ejection head. That is, it is possible to prevent the variation in the position and the posture of the liquid ejection head.

(Appendix 6) In a sixth aspect, which is a preferred example of the fifth aspect, the predetermined length is longer than a length from a center to an end of a nozzle surface of the liquid ejection head in the scanning direction. In the above aspect, the smoothing processing can be performed including the region positioned in front of the length of the liquid ejection head. As a result, it is possible to prevent a rapid change in the position and the posture of the liquid ejection head. That is, it is possible to prevent the variation in the position and the posture of the liquid ejection head.

(Appendix 7) In a seventh aspect, which is a preferred example of the fourth to sixth aspects, the apparatus further includes a curing portion that is supported by the tip end portion, is disposed behind the liquid ejection head in a scanning direction, which is a direction along which the liquid ejection head is scanned with respect to the workpiece, and cures a liquid ejected from the liquid ejection head onto the printing surface, in which when the smoothing processing is performed at a first point on the temporary path, the control portion performs the smoothing processing on a region including a range from the first point to a length corresponding to a length of the curing portion rearward in the scanning direction. In the above aspect, the collision between the curing portion and the workpiece can be prevented.

(Appendix 8) In an eighth aspect, which is a preferred example of the fourth to seventh aspects, the control portion performs the smoothing processing including a region ahead of a front end of a printing region in a scanning direction, which is a direction along which the liquid ejection head is scanned with respect to the workpiece along the temporary path. In the above aspect, it is possible to prevent the collision between the surface of the workpiece in front of the printing surface of the workpiece and the liquid ejection head.

(Appendix 9) In a ninth aspect, which is a preferred example of the fourth to eighth aspects, the control portion is configured to adjust a size of a region where the smoothing processing is performed. In the above aspect, the size of the region where the smoothing processing is performed can be adjusted, and thus the usability is good. For example, when a structure supported by the tip end portion of the multi-joint robot is replaced, even when the dimension of the structure differs before and after the replacement or the deviation due to the tolerance of the structure occurs, since the size of the region where the smoothing processing is performed is adjusted, the smoothing processing can be appropriately performed.

(Appendix 10) In a tenth aspect, which is a preferred example of the ninth aspect, when a distance between the printing surface and the liquid ejection head in the printing path is greater than a predetermined value, the control portion reduces the size of the region where the smoothing processing is performed. In the above aspect, the distance between the printing surface and the liquid ejection head can be appropriately adjusted. As a result, the printing quality can be improved.

(Appendix 11) In an eleventh aspect, which is a preferred example of the fourth to tenth aspects, when the smoothing processing is performed at a first point on the temporary path, the control portion corrects a posture of the liquid ejection head such that a perpendicular line on a nozzle surface of the liquid ejection head positioned at the first point is perpendicular to a surface indicated by the smoothing data, when creating the printing path. In the above aspect, since the posture of the liquid ejection head is corrected so that the nozzle surface is horizontal with respect to the surface indicated by the smoothing data, the collision between the liquid ejection head and the workpiece can be suitably prevented.

(Appendix 12) In a twelfth aspect, which is a preferred example of the first to eleventh aspects, when the liquid ejection head is scanned with respect to the printing surface along the printing path, a distance between the printing surface and the liquid ejection head is equal to or more than 1 mm and equal to or less than 10 mm. In the above aspect, it is possible to prevent the landing deviation of the liquid from the liquid ejection head to the printing surface while preventing the collision between the liquid ejection head and the workpiece.

(Appendix 13) In a thirteenth aspect, which is a preferred example of the second to eleventh aspects, the control portion performs a collision determination to determine presence or absence of a collision between the liquid ejection head and the workpiece. In the above aspect, when it is determined that there is a collision between the liquid ejection head and the workpiece, the printing path can be created again. As a result, it is possible to avoid the collision between the liquid ejection head and the workpiece.

(Appendix 14) In a fourteenth aspect, which is a preferred example of the thirteenth aspect, in the collision determination, when it is determined that the liquid ejection head and the workpiece collide, the control portion adjusts a correction value in the smoothing processing and then performs the smoothing processing again. In the above aspect, it is possible to create a printing path that can avoid the collision between the liquid ejection head and the workpiece.

(Appendix 15) In a fifteenth aspect, which is a preferred example of the second to eleventh aspects, the control portion acquires a first amount of change, which is an amount of change in a distance between the liquid ejection head and the workpiece when the liquid ejection head is scanned with respect to the printing surface along the printing path, and a second amount of change, which is an amount of change in a posture of the liquid ejection head with respect to the workpiece, and adjusts a correction value in the smoothing processing to perform the smoothing processing again, when one or both of the first amount of change and the second amount of change is greater than a predetermined value. In the above aspect, it is possible to create a printing path in which each of the amount of change in the distance between the liquid ejection head and the workpiece, and the amount of change in the posture of the liquid ejection head with respect to the workpiece is appropriately set.

(Appendix 16) In a sixteenth aspect, which is a preferred example of the first to fifteenth aspects, the control portion acquires image data indicating an image to be printed on the printing surface, and adjusts an ejection operation of the liquid ejection head for each nozzle in the printing path based on the printing path and the image data after the smoothing processing. In the above aspect, the landing position of the liquid from the liquid ejection head to the printing surface can be suitably adjusted. As a result, it is possible to improve the printing quality.

(Appendix 17) According to a seventeenth aspect, which is a preferred example of the path generation method of the present disclosure, the path generation method of creating a printing path, which is a movement path of a liquid ejection head during printing using a three-dimensional object printing apparatus including the liquid ejection head having a plurality of nozzles ejecting a liquid toward a workpiece and a multi-joint robot having a tip end portion supporting the liquid ejection head and causing the liquid ejection head to scan with respect to the workpiece, the method including generating smoothing data by performing smoothing processing on workpiece data indicating a shape of a printing surface, which is a surface of the workpiece to be printed, and creating a printing path based on the smoothing data, in which in the generating of the smoothing data, the printing surface is divided into predetermined regions to perform the smoothing processing.

(Appendix 18) In an eighteenth aspect, which is a preferred example of the seventeenth aspect, the method further includes creating a temporary path based on the workpiece data indicating the shape of the printing surface, which is a surface of the workpiece to be printed, in which in the generating of the smoothing data, the smoothing processing is performed based on the temporary path.

In the above aspect, since the printing path is created based on the smoothing data, even when the printing surface has a shape having unevenness, it is possible to create a printing path in which the amount of change in the position and the posture of the liquid ejection head is gradual. As a result, it is possible to prevent the collision between the liquid ejection head and the workpiece while reducing the variation in the distance between the liquid ejection head and the printing surface. In addition, since the printing surface is divided into the predetermined regions to perform the smoothing processing, the reproducibility of the shape of the printing surface in the smoothing data can be improved as compared with the aspect in which the smoothing processing is collectively performed on the entire printing surface. As a result, the variation in the distance between the liquid ejection head and the printing surface can be reduced.

## Claims

1. A three-dimensional object printing apparatus comprising:
a liquid ejection head that includes a plurality of nozzles ejecting a liquid toward a workpiece;
a multi-joint robot that includes a tip end portion supporting the liquid ejection head and causes the liquid ejection head to scan with respect to the workpiece; and
a control portion that creates a printing path along which the liquid ejection head is scanned, wherein
the control portion
generates smoothing data by performing smoothing processing on workpiece data indicating a shape of a printing surface, which is a surface of the workpiece to be printed, and
creates the printing path based on the smoothing data.

2. The three-dimensional object printing apparatus according to claim 1, wherein
the control portion divides the printing surface into predetermined regions to perform the smoothing processing.

3. The three-dimensional object printing apparatus according to claim 2, wherein
the control portion creates a temporary path based on the workpiece data and performs the smoothing processing based on the temporary path.

4. The three-dimensional object printing apparatus according to claim 3, wherein
the control portion performs the smoothing processing for each point on the temporary path.

5. The three-dimensional object printing apparatus according to claim 4, wherein
when the smoothing processing is performed at a first point on the temporary path, the control portion performs the smoothing processing on a region including a range from the first point to a predetermined length forward in a scanning direction, which is a direction along which the liquid ejection head is scanned with respect to the workpiece along the temporary path.

6. The three-dimensional object printing apparatus according to claim 5, wherein
the predetermined length is longer than a length from a center to an end of a nozzle surface of the liquid ejection head in the scanning direction.

7. The three-dimensional object printing apparatus according to any one of claims 4 to 6, further comprising:
a curing portion that is supported by the tip end portion, is disposed behind the liquid ejection head in a scanning direction, which is a direction along which the liquid ejection head is scanned with respect to the workpiece, and cures a liquid ejected from the liquid ejection head onto the printing surface, wherein
when the smoothing processing is performed at a first point on the temporary path, the control portion performs the smoothing processing on a region including a range from the first point to a length corresponding to a length of the curing portion rearward in the scanning direction.

8. The three-dimensional object printing apparatus according to any one of claims 4 to 6, wherein
the control portion performs the smoothing processing including a region ahead of a front end of a printing region in a scanning direction, which is a direction along which the liquid ejection head is scanned with respect to the workpiece along the temporary path.

9. The three-dimensional object printing apparatus according to any one of claims 4 to 8, wherein
the control portion is configured to adjust a size of a region where the smoothing processing is performed.

10. The three-dimensional object printing apparatus according to claim 9, wherein
when a distance between the printing surface and the liquid ejection head in the printing path is greater than a predetermined value, the control portion reduces the size of the region where the smoothing processing is performed.

11. The three-dimensional object printing apparatus according to any one of claims 4 to 10, wherein
when the smoothing processing is performed at a first point on the temporary path, the control portion corrects a posture of the liquid ejection head such that a perpendicular line on a nozzle surface of the liquid ejection head positioned at the first point is perpendicular to a surface indicated by the smoothing data, when creating the printing path.

12. The three-dimensional object printing apparatus according to any one of claims 2 to 11, wherein
the control portion performs a collision determination to determine presence or absence of a collision between the liquid ejection head and the workpiece, wherein
in the collision determination, when it is determined that the liquid ejection head and the workpiece collide, the control portion adjusts a correction value in the smoothing processing and then performs the smoothing processing again.

13. The three-dimensional object printing apparatus according to any one of claims 2 to 11, wherein
the control portion
acquires a first amount of change, which is an amount of change in a distance between the liquid ejection head and the workpiece when the liquid ejection head is scanned with respect to the printing surface along the printing path, and a second amount of change, which is an amount of change in a posture of the liquid ejection head with respect to the workpiece, and
adjusts a correction value in the smoothing processing to perform the smoothing processing again, when one or both of the first amount of change and the second amount of change is greater than a predetermined value.

14. The three-dimensional object printing apparatus according to any one of claims 1 to 13, wherein
in a printing operation of performing printing on the workpiece, a first distance, which is a distance between the liquid ejection head and the workpiece at a first position in which the liquid ejection head directs upward so as to approach a top portion of a projected portion, is longer than a second distance, which is a distance between the liquid ejection head and the workpiece at a second position in which the liquid ejection head directs downward so as to be away from the top portion of the projected portion.

15. A path generation method of creating a printing path, which is a movement path of a liquid ejection head during printing using a three-dimensional object printing apparatus including the liquid ejection head having a plurality of nozzles ejecting a liquid toward a workpiece and a multi-joint robot having a tip end portion supporting the liquid ejection head and causing the liquid ejection head to scan with respect to the workpiece, the method comprising:
generating smoothing data by performing smoothing processing on workpiece data indicating a shape of a printing surface, which is a surface of the workpiece to be printed; and
creating a printing path based on the smoothing data, wherein
in the generating of the smoothing data, the printing surface is divided into predetermined regions to perform the smoothing processing.
